# EUROPEAN PATENT APPLICATION

(11) **EP 1 944 820 A1**
(43) Date of publication of application: **16.07.2008**
(21) Application number: 06798114.2
(22) Date of filing: 13.09.2006
(51) Int. Cl.: H01M 8/02, C08G 81/00, C08J 5/22, H01B 1/06, H01B 1/12, H01M 4/86, H01M 8/10

(54) **POLYMER ELECTROLYTE, POLYMER ELECTROLYTE MEMBRANE USING SAME, MEMBRANE-ELECTRODE ASSEMBLY AND FUEL CELL**

(30) Priority: 16.09.2005 JP 2005270675; 16.09.2005 JP 2005270755
(71) Applicant: Sumitomo Chemical Company, Limited, Tokyo 104-8260 (JP)
(72) Inventor: SAITO, Shin, Tsukuba-shi Ibaraki 305-0005 (JP); IWASAKI, Katsuhiko, Tsukuba-shi Ibaraki 305-0003 (JP); YOSHIMURA, Ken, Norcross Georgia 30092 (US); YAMADA, Takashi, Norcross Georgia 3050821 (JP)
(74) Representative: Vossius & Partner
(86) International application number: PCT/JP2006/318553
(87) International publication number: WO 2007/032541

(57) **Abstract**

The present invention provides polymer electrolyte that has the ion-exchange capacity of 1.7 meq/g or more and has the reduced viscosity of 160 mL/g or more at 40°C when being made to be 1 % by weight solution with at least one kind of solvent selected from the group consisting of N,N-dimethylformamide, N-methyl-2-pyrrolidone, dimethyl sulfoxide, N,N-dimethylacetamide, sulfolane, and γ-butyrolactone, and polymer electrolyte that has the ion-exchange capacity of 1.7 meq/g or more and the reduced viscosity of 160 mL/g or more at 40°C when being made to be 1 % by weight solution with at least one kind of solvent selected from the group consisting of N,N-dimethylformamide, N-methyl-2-pyrrolidone, and dimethyl sulfoxide.

## Description

### TECHNICAL FIELD

The present invention relates to polymer electrolyte, and to polymer electrolyte membrane, membrane-electrode assembly and fuel cell that are using the polymer electrolyte.

### BACKGROUND ART

As a proton conductive membrane in a solid polymer type fuel cell, a proton conductive membrane made of a proton conductive polymer electrolyte membrane is used. In recent years, as an electric generator for a house and automobile, the practical application of the solid polymer type fuel cell is expected, and as for such fuel cells, it is required to be possible to be operated at higher power generation efficiency than ever before.

One of the way to make it possible to operate at high efficiency is to enhance the proton conductivity of the proton conductive membrane, and it is necessary to heat the proton conductive membrane (a polymer electrolyte membrane) enough to make sure of high proton conductivity. Moreover, during operation of the fuel cell (during power generation), water is produced by the reaction of raw gases, and the water is also absorbed into the polymer electrolyte membrane. For this reason, when the fuel cell is operated, the polymer electrolyte membrane is in a swollen state. On the other hand, when the fuel cell is stopped, because no water is produced as the time of operation, the polymer electrolyte membrane shrinks with decreasing in the water content. In this way, the polymer electrolyte membrane in the fuel cell expands and shrinks with the operation and the stop of the fuel cell.

For example, in case of using a fuel cell in a house, such a mode of operation is assumed that the fuel cell is operated at daytime when electric power consumption is high and the fuel cell is stopped at night when electric power consumption is low. Moreover, in case of using a fuel cell as a power source for automobile, a traveling state and a stopped state are alternately repeated frequently, and the fuel cell is assumed to be operated and stopped accordingly.

However, in such use conditions that the operation and stop are repeated, the polymer electrolyte membrane will be repeatedly expanded and shrunk. In this case, the polymer electrolyte membrane may destroy the surrounding members of the polymer electrolyte membrane owing to the dimensional change, as well as the membrane itself becomes easily deteriorate such as being broken. For this reason, conventional fuel cells tended to be insufficient in durability when being used under high humidity conditions so as to make the operation possible at high efficiency.

Accordingly, in order to avoid such inconvenience, a polymer electrolyte membrane described in Japanese Patent Application Laid-Open (JP-A) No. 2002-34380 has been disclosed as one that can be operated at low humidity and the dimensional change owing to water absorption is small. Such polymer electrolyte membrane is 20 Ω·cm or less in specific resistance, -5 % to +5 % in the rate of dimensional change at the time of being hydrous, low in resistance, excellent in proton conductivity, and furthermore is shown to be small in dimensional change at the time of being hydrous.

### DISCLOSURE OF THE INVENTION

However, when the polymer electrolyte membrane by the above-mentioned conventional technology is used, the fuel cell often can not exhibit sufficient output and has tended to be difficult to certainly reach the operation with high efficiency.

Accordingly, the present invention has been achieved in consideration of the above-mentioned circumstances, and is aimed at providing such polymer electrolyte as can form a polymer electrolyte membrane by which a fuel cell with high efficiency can certainly be obtained and the membrane having the small dimensional change owing to water absorption. The present invention is also aimed at providing a polymer electrolyte membrane, a membrane-electrode assembly and a fuel cell that are using the above-mentioned polymer electrolyte.

To achieve the above-mentioned aim, the polymer electrolyte of the present invention is characterized by having the ion-exchange capacity of 1.7 meq/g or more, and having the reduced viscosity of 160 mL/g or more at 40°C when being made to be 1 % by weight solution with at least one kind of solvent selected from the group consisting of N,N-dimethylformamide, N-methyl-2-pyrrolidone, dimethyl sulfoxide, N,N-dimethylacetamide, sulfolane, and γ-butyrolactone.

The polymer electrolyte membrane by the above-mentioned conventional technology is 20 Ω·cm or less in specific resistance of the membrane and low in resistance as mentioned above. This specific resistance is a value measured along the surface direction of the membrane by the alternating-current impedance method. However, the present inventors have minutely examined the polymer electrolyte membrane to be used for a fuel cell, resulting in finding that the resistance in not the surface direction generally measured but the thickness direction is important as the resistance of the membrane to improve the operating efficiency of a fuel cell. It is considered that this is because in a fuel cell, protons flow not in the surface direction but in the thickness direction of the membrane. And, some of polymer electrolyte membranes have anisotropy in proton conductivity in the surface direction and the membrane thickness direction of the membrane. In such a polymer electrolyte membrane, it became clear that not only resistance in the surface direction was lowered but a fuel cell with sufficiently high efficiency may not be provided.

On the other hand, the polymer electrolyte having the above-mentioned constitution of the present invention can more certainly form a polymer electrolyte membrane with low resistance not only in the membrane surface direction but in the membrane thickness direction. For this reason, a fuel cell which can be operated at high efficiency even in a low humidification state can be easily provided by the use of such a polymer electrolyte membrane. Moreover, because the polymer electrolyte membrane comprising the polymer electrolyte of the present invention makes it possible to operate a fuel cell in a low humidity state as mentioned above, in addition to the fact that the dimensional change of the membrane is hard to be caused originally, the dimensional change becomes very small even if much water is absorbed. For this reason, in a fuel cell having such a polymer electrolyte membrane, destruction, performance deterioration, and the like, which will be caused by the degradation of the polymer electrolyte membrane, become difficult to be occurred even if the operation and stop are repeated.

From the standpoint of obtaining the above-mentioned effect more certainly, the polymer electrolyte of the present invention is more preferable to be 1.7 meq/g or more in ion-exchange capacity, and to be 160 mL/g or more in reduced viscosity at 40°C when being made to be 1 % by weight solution with at least one kind of solvent selected from the group consisting of N,N-dimethylformamide, N-methyl-2-pyrrolidone, and dimethyl sulfoxide.

The above-mentioned polymer electrolyte of the present invention is preferable to contain a block copolymer as an ion conductive component having the first segment having an ion-exchange group and the second segment substantially having no ion-exchange group. Because such a block copolymer can reveal excellent proton conductivity, the polymer electrolyte containing the block copolymer can form a polymer electrolyte membrane having further small resistance in the membrane thickness direction.

When polymer electrolyte contains the above-mentioned block copolymer, the second segment in such a block copolymer is preferable to have a weight-average molecular weight of 40,000 or more. In this case, if the aforesaid polymer electrolyte is the form of a membrane, it becomes possible for such a membrane to obtain the effect that the swelling and shrinkage of the membrane (dimensional fluctuation) caused by water absorption and drying is remarkably lowered. Moreover, the first segment is preferable to be 3.6 meq/g or more in ion-exchange capacity. The ion-exchange capacity of the whole polymer electrolyte becomes herewith easily to be in the preferred range, which makes it possible to obtain better proton conductivity in the membrane thickness direction.

Moreover, the above-mentioned polymer electrolyte of the present invention is preferable to be soluble in an organic solvent. Such polymer electrolyte can be formed into a polymer electrolyte membrane through a simple membrane manufacturing process in which no complicated operation including thermal bridging is needed.

The present invention also provides a polymer electrolyte membrane comprising the above-mentioned polymer electrolyte of the present invention. Because resistance in the membrane thickness direction is small and dimensional change caused by water absorption is small in such a polymer electrolyte membrane, a fuel cell with high efficiency and excellent durability can be obtained by the use of the membrane.

As for the above-mentioned polymer electrolyte of the present invention, when the prescribed length in the surface direction is referred to as Lw when water adsorption is saturated at 80°C and the above-mentioned prescribed length in the surface direction is referred to as Ld when water adsorption comes to equilibrium at 23°C and at a relative humidity of 50 %, it is preferable that (Lw - Ld)/Ld is 0.08 or less and the resistance of the membrane in the membrane thickness direction is 0.1 Ω·cm² or less at 23°C.

Though the above-mentioned polymer electrolyte membrane of the conventional technology was the one that the dimensional change was small at the time of being hydrous, such dimensional changes were values in the neighborhood of ordinary temperature (25°C) . However, a fuel cell is usually operated at temperatures over 70°C, and the above-mentioned polymer electrolyte membrane of the conventional technology was not clear whether it could sufficiently control the dimensional change caused by water absorption even at the time of operation of the fuel cell. On the other hand, the above-mentioned polymer electrolyte of the present invention is the one that the dimensional change caused by water absorption is sufficiently small at 80°C. For this reason, such a polymer electrolyte membrane is small in dimensional change even at the temperature range where a fuel cell is generally used, so that the degradation caused by the operation and stop of the fuel cell becomes difficult to be occurred. Further, the polymer electrolyte membrane of the present invention is extremely small in membrane resistance in the membrane thickness direction, consequently it has also excellent proton conductivity.

The present invention also provides a membrane-electrode assembly that has used the above-mentioned polymer electrolyte of the present invention. That is, the membrane-electrode assembly of the present invention has features that it has a polymer electrolyte membrane and a catalyst layer formed on this polymer electrolyte membrane, and that the polymer electrolyte membrane contains the above-mentioned polymer electrolyte of the present invention. Moreover, it may be said that the membrane-electrode assembly of the present invention has features that it has a polymer electrolyte membrane and a catalyst layer formed on this polymer electrolyte membrane, and that the catalyst layer contains the above-mentioned polymer electrolyte of the present invention and a catalyst. Such a membrane-electrode assembly is excellent in proton conductivity and can produce electric power at high efficiency, and further becomes small in dimensional change caused by the operation and stop and excellent in durability, because the polymer electrolyte membrane and / or the catalyst layer contains the polymer electrolyte of the present invention.

Further, the present invention provides a fuel cell having the above-mentioned membrane-electrode assembly of the present invention. That is, the fuel cell of the present invention has features that it has one pair of separators and a membrane-electrode assembly arranged between this one pair of separators, and that the membrane-electrode assembly is the above-mentioned membrane-electrode assembly of the present invention. Such membrane-electrode assembly can produce electric power at high efficiency, and further becomes excellent in durability, because it has the above-mentioned membrane-electrode assembly of the present invention.

### BRIEF DESCRIPTION OF THE DRAWINGS

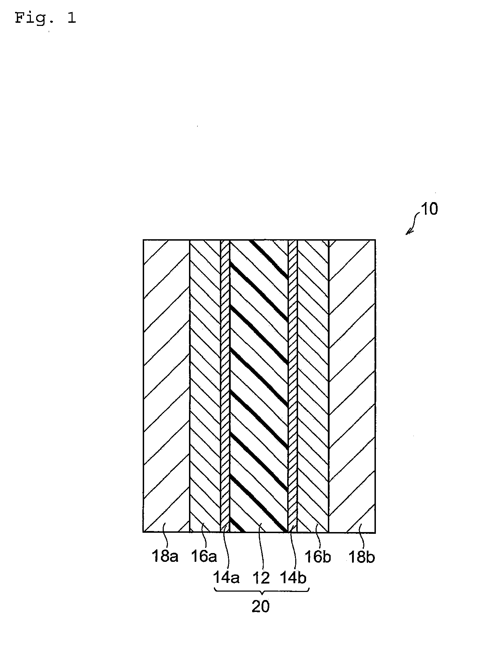

Fig. 1 is a diagram typically showing the cross sectional constitution of the fuel cell being concerned in preferred embodiment.

### DESCRIPTION OF SYMBOLS

- 10: Fuel cell
- 12: Polymer electrolyte membrane
- 14a, 14b: Catalyst layer
- 16a, 16b: Gaseous diffusion layer
- 18a, 18b: Separator
- 20: MEA.

### BEST MODE FOR CARRYING OUT THE INVENTION

Hereinafter, preferred embodiments of the present invention will be described with reference to the drawings as occasion demands.

### [Polymer electrolyte]

Polymer electrolyte being concerned in preferred embodiment is the one that has the ion-exchange capacity of 1.7 meq/g or more, and has the reduced viscosity of 160 mL/g or more at 40°C when being made to be 1 % by weight solution with at least one kind of solvent selected from the group consisting of N,N-dimethylformamide, N-methyl-pyrrolidone, dimethyl sulfoxide, N,N-dimethylacetamide, sulfolane, and γ-butyrolactone.

Polymer electrolyte having the ion-exchange capacity of 1.7 meq/g or more is sufficiently small in membrane resistance in the membrane thickness direction, and can provide a polymer electrolyte membrane having the membrane resistance of 0.1 Ω·cm² or less as concretely described later. It is considered that this is because polymer electrolyte is made to have sufficient ion-exchange groups contributing to ion conduction by making its ion-exchange capacity such values. From the standpoint of making the membrane resistance of a polymer electrolyte membrane further small, the ion-exchange capacity of the polymer electrolyte is preferable to be 1. 8 meq/g or more, and more preferable to be 1.9 meq/g. Here, the ion-exchange capacity of the polymer electrolyte can be measured by the titrimetric method. That is, for example, first, ion-exchange groups in the polymer electrolyte are transformed completely to proton types, after that, the ion-exchange groups in the polymer electrolyte are transformed to sodium salt types by dipping this polymer electrolyte in the aqueous sodium hydroxide solution having the prescribed concentration and volume, and then the ion-exchange capacity can be found by titrating this sodium hydroxide solution with dilute hydrochloric acid in the prescribed concentration.

Moreover, when the polymer electrolyte has the reduced viscosity of 160 mL/g or more at 40°C when being made to be 1 % by mass solution with at least one kind of solvent selected from the group consisting of N,N-dimethylformamide (DMF), N-methyl-pyrrolidone (NMP), dimethyl sulfoxide (DMSO), N,N-dimethylacetamide (DMAc), sulfolane, and y-butyrolactone, such polymer electrolyte can form a polymer electrolyte membrane having extremely small dimensional change caused by water absorption. This is presumed that the polymer electrolyte having the above-mentioned reduced viscosity is excellent in the property opposing the force of swelling by water absorption because of being constituted by a polymer with high molecular weight. In order to make the rate of dimensional change of the polymer electrolyte membrane at the time of being hydrous small so as to be preferred level, the reduced viscosity of the polymer electrolyte is more preferable to be 200 mL/g or more, and further preferable to be 220 mL/g. Such reduced viscosity values can be measured by the use of a well-known viscometer.

Here, as a solvent in 1% by weight solution of a polymer electrolyte at the time of measuring the reduced viscosity, DMF, NMP, or DMSO is preferable.

In more concrete terms, it is preferable to select a solvent to be used for measuring the reduced viscosity in the order shown below.

That is, the polymer electrolyte is first dissolved in DMF, and when being not dissolved, it is dissolved in NMP. When it is not dissolved in both of DMF and NMP, then DMSO is selected. Further, when it is not dissolved in any of DMF, NMP, and DMSO, DMAc is applied. And further, when it is not dissolved in any of DMF, NMP, DMSO, and DMAc, sulfolane is selected. Moreover, when it is not dissolved in any of these, γ-butyrolactone is used. And, any polymer electrolyte in the present embodiment is acceptable as long as the above-mentioned reduced viscosity can be obtained when at least one kind among these solvents is used.

Further, polymer electrolyte in the present embodiment is more preferable to be such one as being soluble in the prescribed solvent, especially in organic solvents. Membrane manufacturing becomes possible in more simple process by dissolving polymer electrolyte in an organic solvent, and a polymer electrolyte membrane can be obtained easily. Here, as solvents that can dissolve polymer electrolyte, such a solvent that when polymer electrolyte in the amount corresponding to 1 % by weight is sufficiently mixed in the solvent and then it is filtrated with a 1 µm filter, the residue of the polymer electrolyte remaining on the filter is 10 % by weight or less is preferable, and more preferable to be 8 % by weight or less, and further preferable to be 5 % by weight or less.

The list of such solvents includes the above-mentioned solvents used for measuring the reduced viscosity, halogenated solvents such as dichloromethane, chloroform, 1,2-dichloroethane, chlorobenzene, and dichlorobenzene, alcohols such as methanol, ethanol, and propanol, and alkylene glycol monoalkyl ethers such as ethylene glycol monomethyl ether, ethylene glycol monoethyl ether, propylene glycol monomethyl ether, and propylene glycol monoethyl ether, and mixed solvents containing two kinds or more of these solvents can be also applied.

Among them, DMF, DMAc, NMP, DMSO, dichloromethane /alcohol mixed solvents, and the like are preferable because they tend to be excellent in solubility for polymer electrolyte.

Though polymer electrolytes in the present embodiment are not especially limited as long as meeting the above-mentioned properties, for example, those containing a polymer having an ion conductive property as an ion conductive component are preferable. As such polymers, aromatic polymers with the constitution having ion-exchange groups in the main chain and or the side chain are listed. In this aromatic polymer, the position of the ion-exchange group to be introduced is not especially limited, for example, the group may be bonded to the aromatic ring constituting the main chain, may be bonded to other aliphatic group constituting the main chain, and may be bonded to the main chain through a substituent. In addition, from the standpoint of the easiness of synthesizing an aromatic polymer, the ion-exchange group is preferable to be bonded to an aromatic ring (particularly a benzene ring) in the repeating unit.

Ion-exchange groups include, for example, cation-exchange groups such as -SO₃H, -COOH, -PO(OH)₂, -POH (OH), -SO₂NHSO₂-, and -Ph(OH) (Ph indicates a phenyl group), and anion-exchange groups such as -NH₂, -NHR, -NRR', -NRR'R"⁺, and

-NH₃⁺ (Each of R, R', and R" indicates independently an alkyl group, a cycloalkyl group, or an aryl group). Part or all of these ion-exchange groups may form salts with counter ions.

Among them, as an ion-exchange group, cation-exchange groups are preferable, a group indicated by -SO₃H, -PO(OH)₂, -POH(OH), or -SO₂NHSO₂- is preferable, a sulfonic acid group (-SO₃H) or a phosphonic acid group (-PO (OH)₂) is more preferable, and a sulfonic acid group is further preferable. In addition, when polymer electrolyte is used in applications for a fuel cell, all of these cation-exchange groups are preferable to be substantially in the form of a free acid.

In more concrete terms, aromatic polymers having an ion conductive property include, for example, such compounds that the above-mentioned ion-exchange groups are introduced into polyether ketone, polyether ether ketone, polysulfone, polyether sulfone, polyether ether sulfone, poly(arylene ether), polyimide, polyphenylene, poly((4-phenoxybenzoyl)-1,4-phenylene), polyphenylene sulfide, polyphenyl quinoxalene, and the like, sulfoarylated polybenzimidazole, sulfoalkylated polybenzimidazole, phosphoalkylated polybenzimidazole (refer to JP-A No. 9-110982), or phosphonated poly(phenylene ether) (J. Appl. Polym. Sci., 18, 1969 (1974)).

Particularly, as a polymer having an ion conductive property contained in polymer electrolyte, alternating copolymers or random copolymers that have a repeating unit containing an ion-exchange group and a repeating unit containing no ion-exchange group (refer to JP-ANo. 11-116679), and block copolymers that have a segment having an ion-exchange group (the first segment) and a segment having substantially no ion-exchange group (the second segment) are preferable. As these ion-exchange groups, those similar to the above-mentioned groups are included.

Among them, as a polymer having an ion conductive property, the latter block copolymers are preferable. Hereinafter, preferred block copolymers will be described.

The block copolymers are those having the first segment and the second segment as mentioned above. "The segment" in such block copolymers refers to the structural unit made by connecting the prescribed plural repeating units in the relevant block copolymer. And, "the block copolymer" refers to the polymer in which two kinds or more segments are combined directly or through a connecting group.

In this block copolymer, a segment "having an ion-exchange group" means that most of repeating units mainly constituting the relevant segment have an ion-exchange group. In concrete terms, it is preferable that the number of ion-exchange groups contained is 0.5 or more in average per one repeating unit constituting the first segment, and more preferable that the number is 1.0 or more.

Moreover, "having substantially no ion-exchange group" means that most of the repeating units mainly constituting the second segment have no ion-exchange group, in concrete terms, the number of ion-exchange groups contained is 0.1 or less in average per one repeating unit constituting the relevant segment, the number is preferable to be 0.05 or less, and it is further preferable that the repeating unit has no ion-exchange unit.

Such a block copolymer is preferable to be a block copolymer obtained by bonding, for example, an oligomer or a polymer,having an ion-exchange group for forming the first segment (the first segment precursor) and an oligomer or a polymer having substantially no ion-exchange group for forming the second segment (the second segment precursor).

In this case, as the first segment precursor, aromatic polymers are preferable and include, for example, polyphenylene, polyphenylene ether, polyphenylene sulfide, polyether ketone, polyether sulfone, or compounds that are copolymers of repeating units constituting these compounds and an ion-exchange group is introduced into these repeating units. In aromatic high molecular compounds that are the first segment precursors, though the position where the ion-exchange group is bonded is not limited, from the standpoint of easiness of synthesis and others, the ion-exchange group is preferable to be bonded to the aromatic ring (especially to a benzene ring) in the repeating unit.

In more concrete terms, as the first segment precursor, polymers that have a structure indicated by the following general formula (1) and an ion-exchange group as mentioned above is introduced in at least part of the repeating unit are listed. When the first segment precursor has such a structure, the first segment has similarly the structure of the following general formula (1). 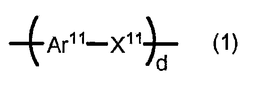 [where Ar¹¹ shows a bivalent aromatic group that may have an alkyl group of 1 to 20 in carbon number, an alkoxy group of 1 to 20 in carbon number, an aryl group of 6 to 20 in carbon number, or an aryloxy group of 6 to 20 in carbon number, X¹¹ shows a direct bond, an oxygen atom, a sulfur atom, a carbonyl group, or a sulfonyl group, and d is an integer of five or more. Further, in the structure indicated by formula (1), plural Ar¹¹ and X¹¹ may be the same or different, respectively.]

Ar¹¹ in the above-mentioned general formula (1) is a bivalent aromatic group, and a bivalence group containing one or plural aromatic groups. That aromatic groups include, for example, bivalent monocyclic hydrocarbon aromatic groups such as a 1,3-phenylene group, and a 1,4-phenylene group, bivalent condensed ring aromatic groups such as a 1,3-naphthalenediyl, 1,4-naphthalenediyl, 1,5-naphthalenediyl, 1,6-naphthalenediyl, 1,7-naphthalenediyl, 2,6-naphthalenediyl, and 2,7-naphthalenediy, and bivalent aromatic heterocyclic groups such as pyridinediyl, quinoxalinediyl, and thiophenediyl. Bivalent monocyclic hydrocarbon aromatic groups are preferable.

Moreover, Ar¹¹ may be replaced with an alkyl group of 1 to 20 in carbon number, an alkoxy group of 1 to 20 in carbon number, an aryl group of 6 to 20 in carbon number, an aryloxy group of 6 to 20 in carbon number, or an acyl group of 2 to 20 in carbon number. Moreover, these substituents may have also a substituent further.

Here, alkyl groups of 1 to 20 in carbon number include, for example, besides alkyl groups of 1 to 20 in carbon number such as a methyl group, an ethyl group, an n-propyl group, an isopropyl group, an n-butyl group, a sec-butyl group, an isobutyl group, an n-pentyl group, a 2, 2-dimethyl propyl group, a cyclopentyl group, an n-hexyl group, a cyclohexyl group, a 2-methylpentyl group, a 2-ethylhexyl group, a nonyl group, a dodecyl group, a hexadecyl group, an octadecyl group, and an icocyl group, alkyl groups of 20 or less in total carbon number that these groups are replaced with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Moreover, alkoxy groups of 1 to 20 in carbon number include, for example, besides alkoxy groups of 1 to 20 in carbon number such as a methoxy group, an ethoxy group, an n-propyloxy group, an isopropyloxy group, an n-butyloxy group, a sec-butyloxy group, a tert-butyloxy group, an isobutyloxy group, an n-pentyloxy group, a 2,2-dimethylpropyloxy group, a cyclopentyloxy group, an n-hexyloxy group, a cyclohexyloxy group, a 2-methylpentyloxy group, a 2-ethylhexyloxy group, a dodecyloxy group, a hexadecyloxy group, and an icocyloxy group, alkoxy groups of 20 or less in total carbon number that these groups are replaced with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Aryl groups of 6 to 20 in carbon number include, for example, besides aryl groups such as a phenyl group, a naphthyl group, a phenanthrenyl group, and an anthracenyl group, aryl groups of 20 or less in total carbon number that these groups are replaced with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Aryloxy groups of 6 to 20 in carbon number include, for example, besides aryloxy groups such as a phenoxy group, a naphthyloxy group, a phenanthrenyloxy group, and an anthracenyloxy group, aryloxy groups of 20 or less in total carbon number that these groups are replaced with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Acyl groups of 2 to 20 in carbon number include, for example, besides acyl groups of 2 to 20 in carbon number such as an acetyl group, a propionyl group, a butyryl group, an isobutyryl group, a benzoyl group, a 1-naphthoyl group, and a 2-naphthoyl group, acyl groups of 20 or less in total carbon number that these groups are replaced with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

When the first segment precursor has a structure indicated by the above-mentioned general formula (1), an ion-exchange group is preferable to be bonded to a group indicated by Ar¹¹. That is, in this case, it is more preferable that the structure indicated by the above-mentioned general formula (1) is a structure indicated by the following general formula (8). 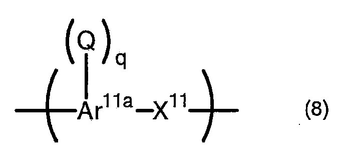 [where X¹¹ is the same meaning as that mentioned above, Ar^{11a} shows a bivalent aromatic group that may have an alkyl group of 1 to 20 in carbon number, an alkoxy group of 1 to 20 in carbon number, an aryl group of 6 to 20 in carbon number, an aryloxy group of 6 to 20 in carbon number, or an acyl group of 2 to 20 in carbon number, Q shows a group containing an ion-exchange group, and q is an integer of one to the number of sites in Ar^{11a} where Q can be bonded.]

Moreover, as Q in the following general formula (8), groups containing ion-exchange groups indicated by the following general formulas of (9a) to (9f) are suitable. 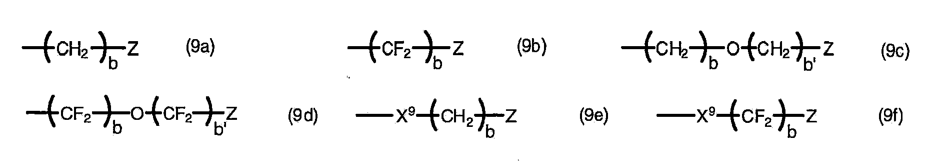 [in the formulas of (9a) to (9f), Z shows an ion-exchange group, X⁹ shows a group indicated by -O-, -S-, -CO-, or -SO₂-, and each of b and b' is independently an integer of 0 to 12.]

In the structure indicated by the above-mentioned general formula (8), a group containing an ion-exchange group indicated by Q is preferable to be bonded to an aromatic ring in an aromatic group indicated by Ar^{11a}. When a group indicated by Ar^{11a} has plural aromatic rings, ion-exchange groups may be bonded to the plural aromatic rings.

As the structure indicated by the general formula (8), in concrete terms, those shown below are listed. That is, first, when X¹¹ is a direct bond, structures indicated by the following formulas of A-1 to A-14 are suitable.

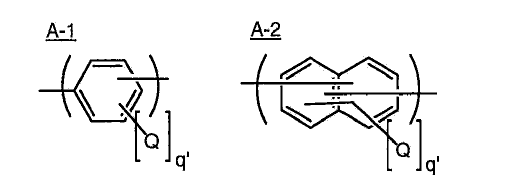

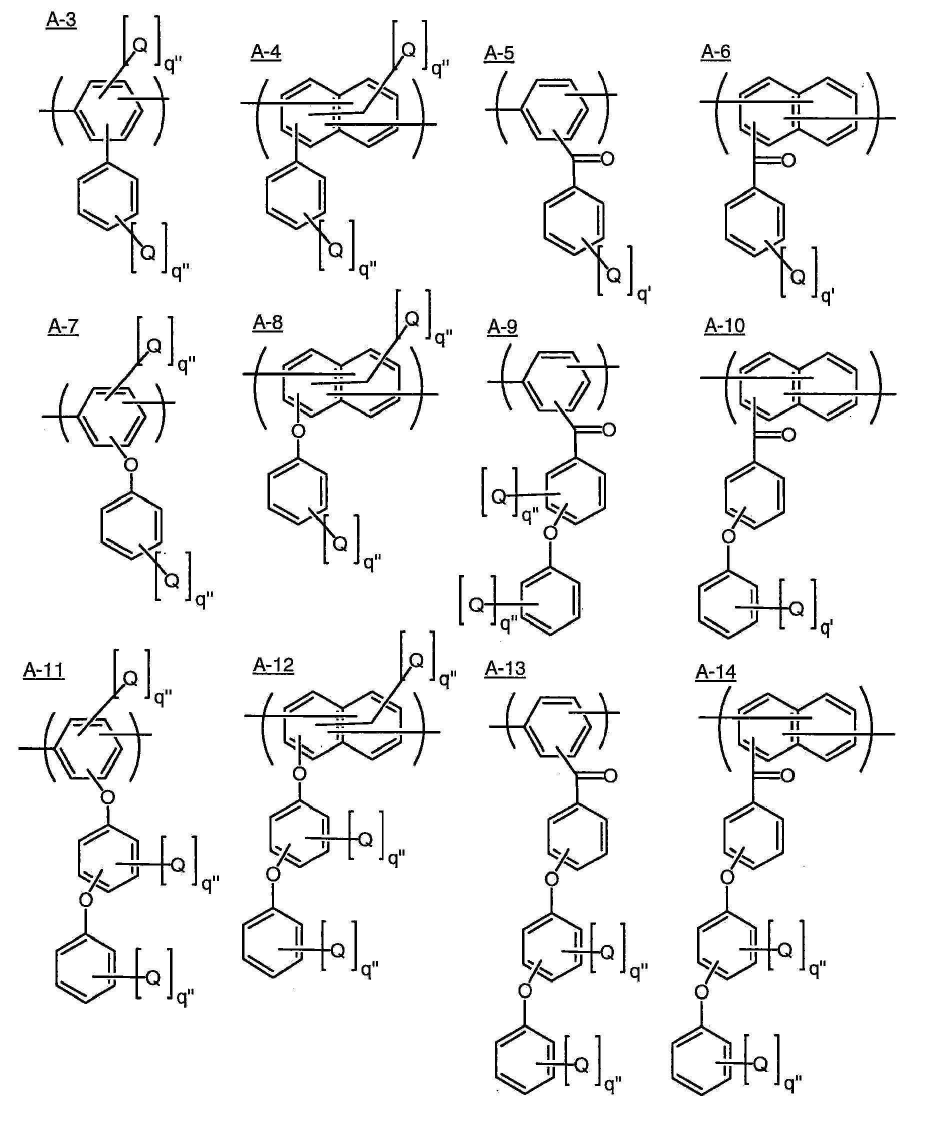

Moreover, when X¹¹ is an oxygen atom, structures indicated by the following formulas of B-1 to B-14 are suitable.

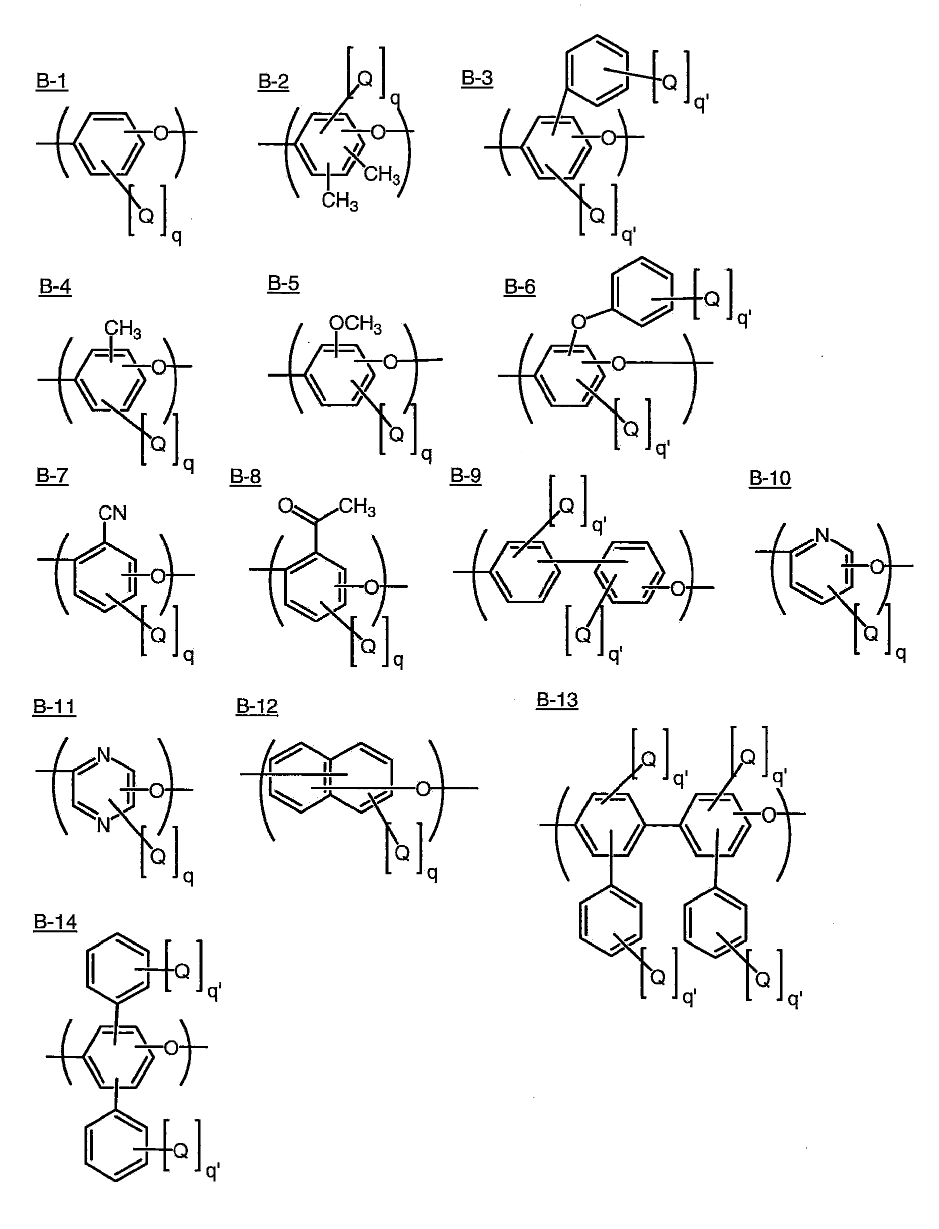

Further, when Ar^{11a} has plural aromatic rings in the direction for repeating the above-mentioned structures, structures indicated by the following formulas of C-1 to C-12 are suitable.

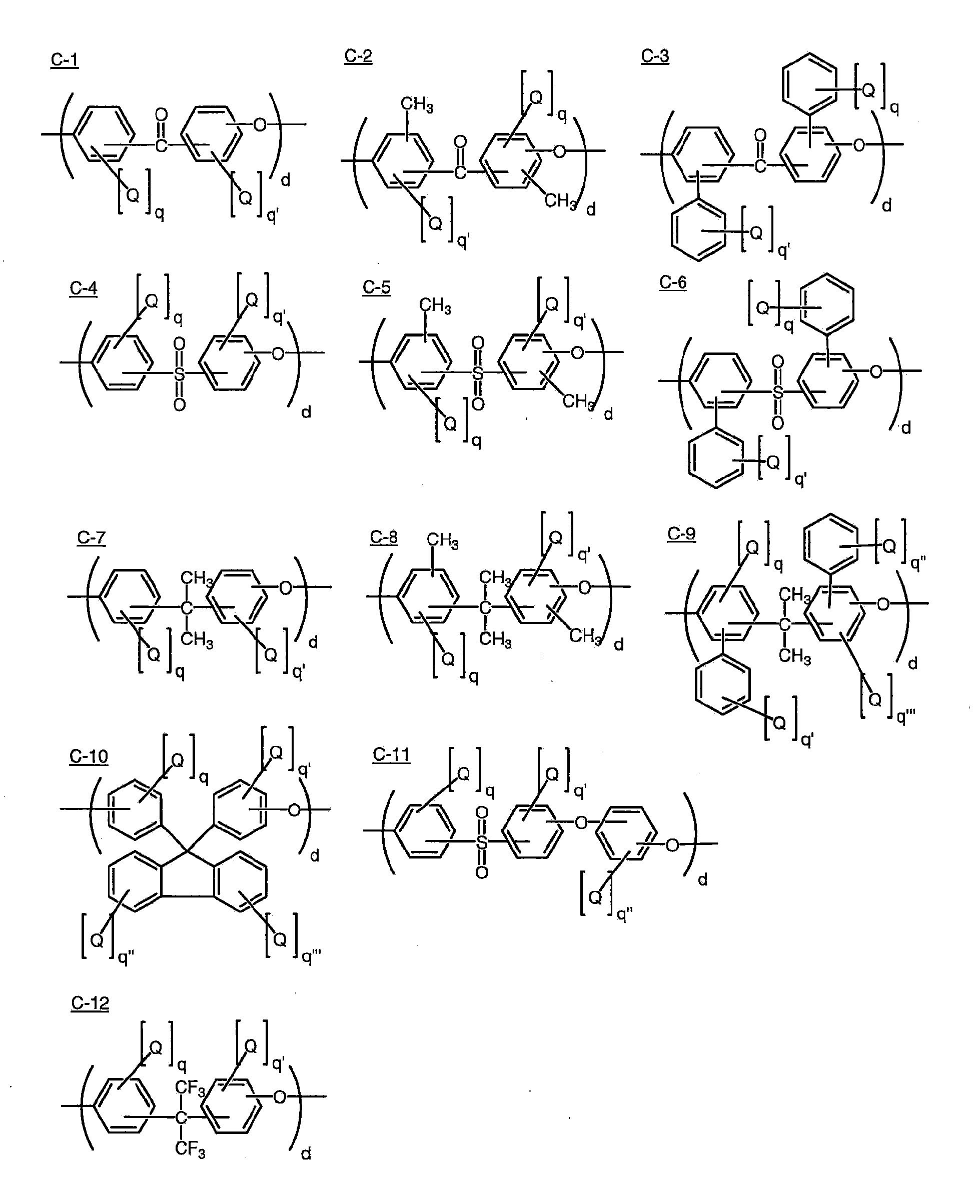

And further, when X¹¹ is a sulfur atom, structures indicated by the following formulas of D-1 to D-6 are suitable.

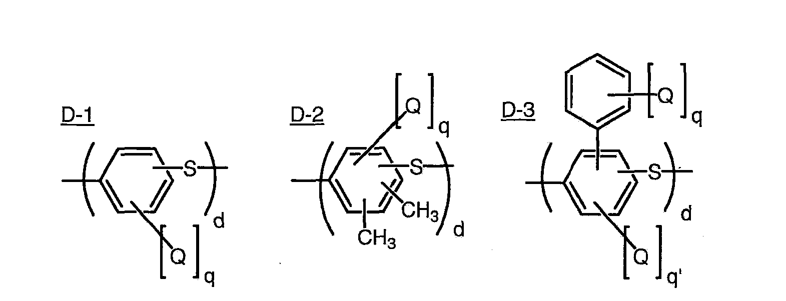

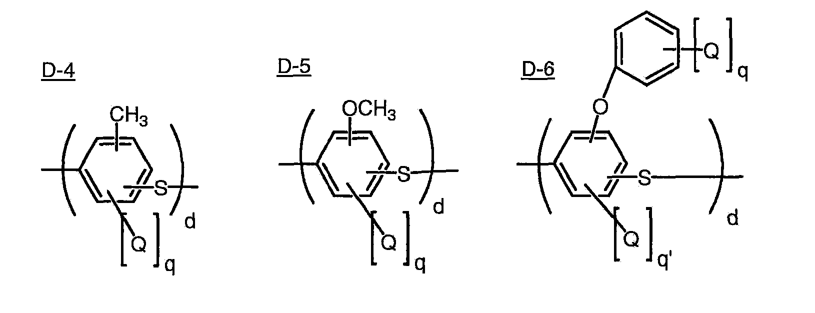

In addition, in the formulas indicated by the above-mentioned A to D, Q is a group containing the same ion-exchange group as that mentioned above, q' indicates 1 or 2, and q" is an integer of 0 to 2 and when plural q"s exist in the same structural unit, they may be the same or different, but they are such numbers that the sum of these plural q' is at least one or more. Moreover, when plural Qs exist in the same structure unit, they may be the same or different. Those connecting d pieces, that is, five pieces or more of such structural units by turning with the structural units indicated by the following general formula (1a) are preferable as the above-mentioned first segment precursor.

(̵Ar¹¹-X¹¹)̵ (1a)

[where Ar¹¹ and X¹¹ are the same meaning as those mentioned above.]

As the first segment precursor, among those mentioned above, such ones are preferable that are connecting structural units selected from (A-1), (A-2), (A-5), (A-9), (A-13), (B-1), (B-3), (B-12), (B-14), (C-1), (C-4), (C-7), (C-10), (C-11), and (C-12), such ones are more preferable that are connecting structural units selected from (A-1), (A-2), (A-5), (A-9), (A-13), (C-4), and (C-11), and those being connecting structural units of (A-1) and / or (C-11) are further preferable. Though the first segment being derived from the first segment precursors contains these structures, as mentioned above, all structural units within parentheses in the first segment do not need to have an ion-exchange group, but it is preferable that (0.5×d) pieces or more of structural units have an ion-exchange group, and it is more preferable that all of d pieces of structural units have an ion-exchange group.

The weight average molecular weight of such the first segment precursor is preferable to be 2,000 or more, more preferable to be 4,000 or more, further preferable to be 6,000 or more, still more preferable to be 8,000 or more, and especially preferable to be 10,000 or more. When the weight average molecular weight of the first segment precursor is 2, 000 or more, the proton conductivity of the polymer electrolyte containing the obtained block copolymer becomes better. In addition, the value of such a weight average molecular weight can be obtained by gel permeation chromatography.

Moreover, as the second segment precursor, aromatic polymers are preferable, for example, polyphenylene, polyphenylene ether, polyphenylene sulfide, polyether ketone, polyether sulfone, or polymers that are copolymers of repeating units constituting these polymers and contain substantially no ion-exchange group are preferable. Here, "contain substantially no ion-exchange group" is the same definition as that mentioned above.

In more concrete terms, as the second segment precursor, compounds having a structure indicated by the following general formula (2) are listed. 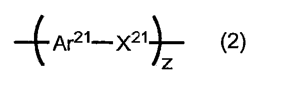 [where Ar²¹ shows a bivalent aromatic group that may have an alkyl group of 1 to 20 in carbon number, an alkoxy group of 1 to 20 in carbon number, an aryl group of 6 to 20 in carbon number, an aryloxy group of 6 to 20 in carbon number, or an acyl group of 2 to 20 in carbon number, X²¹ shows a direct bond, an oxygen atom, a sulfur atom, a carbonyl group, or a sulfonyl group, and z is an integer of five or more.]

In the above-mentioned general formula (2), Ar²¹ may further has an alkyl group of 1 to 20 in carbon number, an alkoxy group of 1 to 20 in carbon number, an aryl group of 6 to 20 in carbon number, an aryloxy group of 6 to 20 in carbon number, or an acyl group of 2 to 20 in carbon number as a substituent, and these substituents also may have a substituent. As this substituent, the same ones illustrated in the above-mentioned Ar¹¹ are listed.

As the structure indicated by the above-mentioned general formula (2), in concrete terms, those indicated by the following formulas (F-1) to (F-22) can be illustrated.

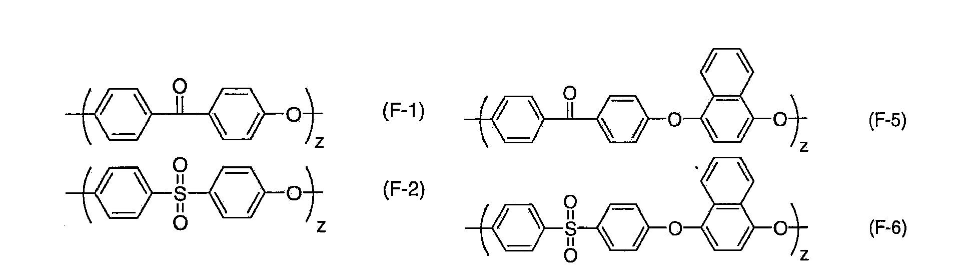

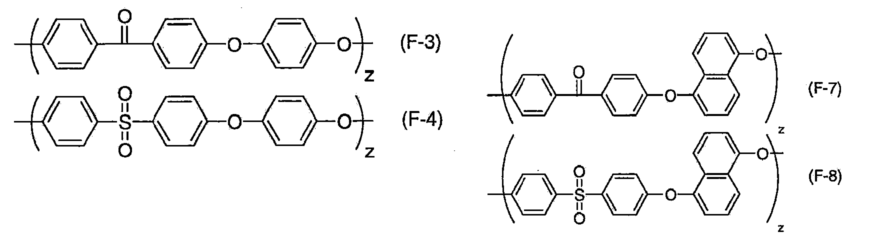

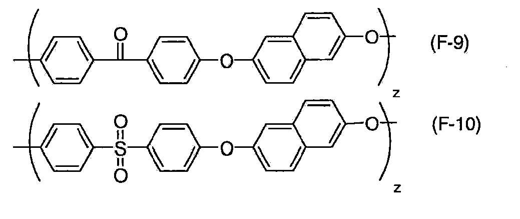

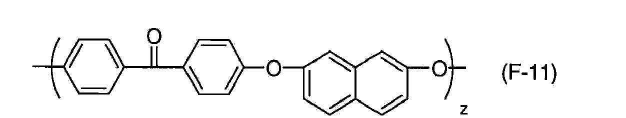

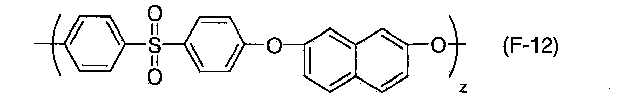

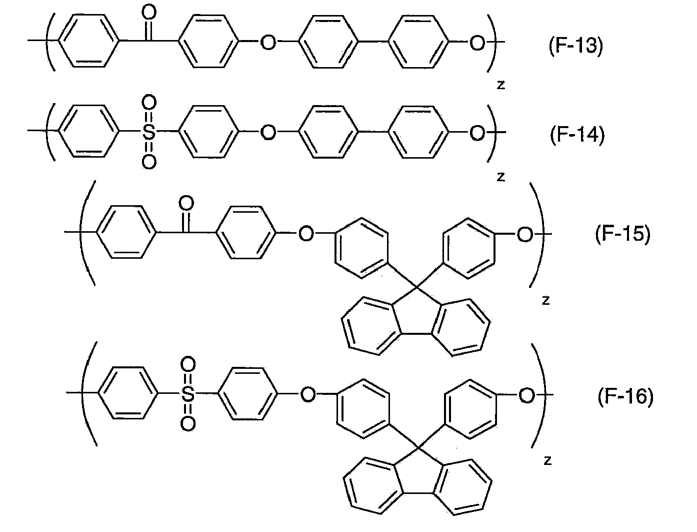

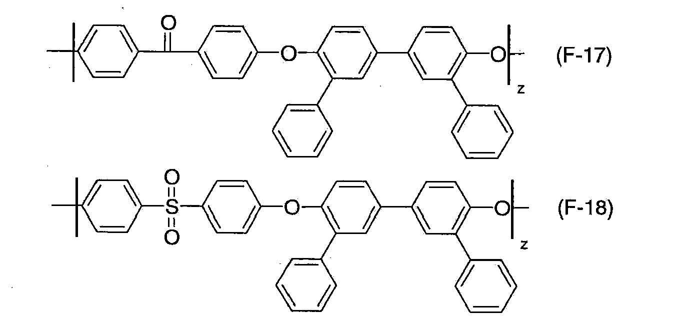

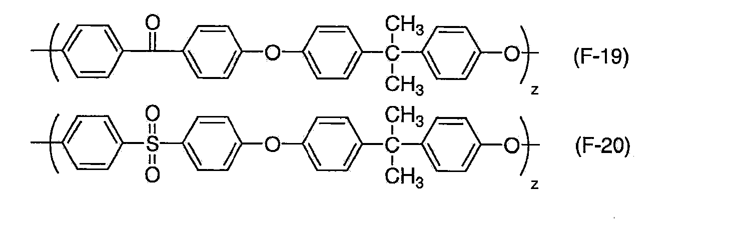

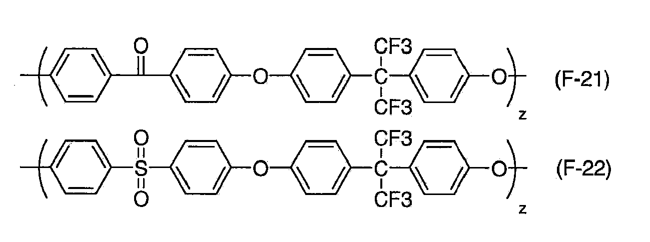

The weight average molecular weight of such the second segment precursor is preferable to be 2,000 or more, more preferable to be 4,000 or more, further preferable to be 6, 000 or more, still more preferable to be 8,000 or more, further preferable to be 10,000 or more, more preferable to be 40,000 or more, still more preferable to be 50,000 or more, and especially preferable to be 70,000 or more. When the weight average molecular weight of the second segment precursor is 2,000 or more, the proton conductivity of the polymer electrolyte containing the obtained block copolymer becomes better. In addition, the value of such a weight average molecular weight can be determined by the same way as that in case of the above-mentioned first segment precursor.

In order to obtain a block copolymer, it is preferable to copolymerize the first segment precursor and the second segment precursor. Such a block copolymerization can be conducted by, for example, reacting the two segment precursors synthesized in advance, or in such a way that one of the segment precursors is synthesized, and a monomer to form the other segment precursor is bonded to the segment, and then the polymerization of the relevant monomer is progressed. This block copolymerization is preferable to be carried out in a mixed solvent containing two kinds of solvents. As such a mixed solvent, for example, a combination of two kinds or more of solvents with different relative permittivity is listed.

Among them, as a mixed solvent, such one containing at least one kind of solvent from a good solvent for the first segment precursor (hereinafter, referred to as "the first good solvent") and a good solvent for the second segment precursor (hereinafter, referred to as "the second good solvent") is preferable, and such one containing both solvents is more preferable. When this is done, the two segment precursors can be reacted in the state of being well dissolved in the solvent, and consequently a block copolymer will be perfectly obtained. In addition, when plural kinds of the first segment precursors or the second segment precursors are used, they may be used by combining the plural kinds as the first good solvent or the second good solvent. Here, "a good solvent for the first (or the second) segment precursor" means a solvent that can dissolve the relevant high molecular compound in the concentration of 5 % by mass or more at 25°C. In addition, when plural kinds of the first (or the second) segment precursors are contained, the total amount of those dissolved (g) is made to be the basis. Moreover, the term "dissolution" here means the state that a homogeneous liquid phase is formed with the segment precursors and the solvent.

For example, when the first good solvent is contained in a mixed solvent, the content of such good solvent is preferable to be 10 % by weight or more in the mixed solvent, more preferable to be 20 % by weight or more, further preferable to be 30 % by weight or more, and especially preferable to be 40% by weight or more. Moreover, when the second good solvent is contained, the content of such good solvent is preferable to be 10 % by weight or more in the mixed solvent, more preferable to be 20 % by weight or more, further preferable to be 30 % by weight or more, and especially preferable to be 40 % by weight or more. And, when both of these solvents are contained, it is further preferable that both solvents meet the above-mentioned conditions. When the content of the first or the second good solvent is 10 % by weight or less, either of the segment precursors becomes difficult to be dissolved in the mixed solvent and is precipitated in the block copolymer, and consequently it tends to be difficult to well obtain the block copolymer.

Moreover, the concentration of the first and the second segment precursors in the mixed solvent for the block copolymerization, that is, the value of 100×[{the weight of the first segment precursor (g)}+{the weight of the second segment precursor (g)}]/[the weight of the block copolymerization solution (g)]is preferable to be made to 1 to 50 % by weight, more preferable to be made to 3 to 40 % by weight, further preferable to be made to 5 to 30 % by weight, and especially preferable to be made to 7 to 20 % by weight. When this is done, the first and the second segment precursors are dissolved enough in the mixed solvent even during the block copolymerization and the block copolymerization becomes to be well progressed.

Moreover, as the first good solvent, solvents with relative permittivity of preferably 40.0 or more are listed. And, as the second good solvent, solvents with relative permittivity of preferably less than 40.0 are listed. In addition, in order to dissolve both of the first and the second segment precursors enough, the difference in the relative permittivity between both precursors is preferable to be 5.0 or more. With the mixed solvent in which the first and the second segment precursors meeting this relative permittivity values are combined, the first and the second segment precursors are dissolved enough, and this block copolymerization becomes to be well progressed.

In more concrete terms, the first good solvents include, for example, alcohol solvents, ether solvents, sulfoxide solvents, amide solvents, carbonates, oligo alkylene glycols, and solvents made by introducing a fluorinated substituent into these. These solvents are preferable to be suitably used according to the kind of the first segment precursor, particularly to the kind of the ion-exchange group possessed by the relevant compound.

Alcohol solvents include methanol, ethanol, isopropanol, and butanol. Ether solvents include diethyl ether, dibutyl ether, diphenyl ether, tetrahydrofuran (THF), dioxane, dioxolane, ethylene glycol monomethyl ether, ethylene glycol monoethyl ether, propylene glycol monomethyl ether, and propylene glycol monoethyl ether.

Sulfoxide solvents include dimethyl sulfoxide (DMSO). Amide solvents include N,N-dimethylacetamide (DMAc), N-methylacetamide, N,N-dimethylformamide (DMF), N-methylformamide, formamide, and N-methyl-pyrrolidone (NMP).

Carbonates include propylene carbonate, ethylene carbonate, dimethyl carbonate, diethyl carbonate, ethyl methyl carbonate, 4-trifluoromethyl-1,3-dioxolane-2-on, and 1,2-di(methoxycarbonyloxy)ethane, esters include methyl formate, methyl acetate, and γ-butyrolactone, nitriles include acetonitrile, and butyronitrile, oligo alkylene glycols include oligo(ethylene glycol), oligo(propylene glycol), and oligo(butylenes glycol).

Among those mentioned above, as the first good solvent, alcohol solvents, sulfoxide solvents, or amide solvents are preferable, sulfoxide solvents or amide solvents are more preferable, sulfoxide solvents are further preferable, and DMSO is especially preferable. DMSO is especially preferable because it can well dissolve the relevant compound when the first segment precursor has a sulfonic acid group as an ion-exchange group.

Moreover, the second good solvents include ketone solvents, ether solvents, halogenated solvents, sulfoxide solvents, sulfone solvents, amide solvents, carbonates, esters, nitriles, oligo alkylene glycols, and solvents made by introducing a fluorinated substituent into these.

Ketone solvents include acetone, methyl isobutyl ketone, methyl ethyl ketone, and benzophenone. Ether solvents include diethyl ether, dibutyl ether, diphenyl ether, tetrahydrofuran (THF), dioxane, dioxolane, ethylene glycol monomethyl ether, ethylene glycol monoethyl ether, propylene glycol monomethyl ether, and propylene glycol monoethyl ether.

Halogenated solvents include chloroform, dichloromethane, 1,2-dichloroethane, 1,1,2,2-tetrachloroethane, chlorobenzene, and dichlorobenzene, sulfoxide solvents include DMSO. Sulfone solvents include diphenyl sulfone and sulfolane, amide solvents include DMAc, N-methylacetamide, DMF, N-methylformamide, formamide, and NMP.

Carbonates include propylene carbonate, ethylene carbonate, dimethyl carbonate, diethyl carbonate, ethyl methyl carbonate, 4-trifluoromethyl-1,3-dioxolane-2-on, and 1,2-di(methoxycarbonyloxy)ethane, esters include methyl formate, methyl acetate, and γ-butyrolactone, nitriles include acetonitrile and butyronitrile, oligo alkylene glycols include oligo(ethylene glycol), oligo(propylene glycol), and oligo(butylenes glycol).

Among those mentioned above, as the second good solvent, ketone solvents, sulfoxide solvents, sulfone solvents, or amide solvents are preferable, sulfoxide solvents or amide solvents are more preferable, amide solvents are further preferable, and NMP is especially preferable.

In addition, though the first good solvent and the second good solvent may be those having the same kind of structure as long as they are good solvents for the first and the second segment precursors, respectively, in this case, among those having the same kind of structure, solvents having different properties and the like are combined and used. In concrete terms, though amide solvents are good solvents for both of the first and the second segment precursors as mentioned above, for example, when DMAc is used as the first good solvent, as the second good solvent, DMF or NMP other than DMAc is selected.

As a suitable combination of the first good solvent and the second good solvent, the combination of a sulfoxide solvent as the first good solvent and an amide solvent as the second good solvent is preferable, in concrete terms, such a combination is especially preferable that the first good solvent is DMSO and the second good solvent is NMP.

In addition, as a mixed solvent, besides the first good solvent and the second good solvent as mentioned above, other solvent may be further added within the range not lowering the solubility of the first and the second segment precursors in the mixed solvent. Such other solvents include, for example, aromatic hydrocarbon solvents such as benzene, toluene, and xylene for azeotropic dehydration, and halogenated aromatic hydrocarbon solvents such as chlorobenzene and dichlorobenzene.

A block copolymer can be obtained by copolymerizing the first segment precursor and the second segment precursor preferably in the above-mentioned mixed solvent. In this case, the block copolymerization maybe carried out in a mixed solvent from the beginning, or may be started in a single solvent and other kind of solvent may be added in the middle of the polymerization. However, in order to homogenize the molecular weight distribution and the like of the block copolymer to be obtained, it is preferable to use a mixed solvent from the beginning of the reaction.

As block copolymers obtained in this way, those having the first segment and the second segment in the combination as shown in the following tables 1 to 5 are suitable. The symbol of each segment in the following tables corresponds to the structures illustrated in the first and the second segment precursors mentioned above, and means that each segment has the structure.

| Block copolymer | The first segment | The second segment |
|---|---|---|
| H-1 | A-1 | F-1 |
| H-2 | A-1 | F-2 |
| H-3 | A-1 | F-3 |
| H-4 | A-1 | F-4 |
| H-5 | A-1 | F-9 |
| H-6 | A-1 | F-10 |
| H-7 | A-1 | F-17 |
| H-8 | A-1 | F-18 |
| H-9 | A-1 | F-19 |
| H-10 | A-1 | F-20 |
| H-11 | A-1 | F-21 |
| H-12 | A-1 | F-22 |

| Block copolymer | The first segment | The second segment |
|---|---|---|
| H-13 | A-5 | F-1 |
| H-14 | A-5 | F-2 |
| H-15 | A-5 | F-3 |
| H-16 | A-5 | F-4 |
| H-17 | A-5 | F-9 |
| H-18 | A-5 | F-10 |
| H-19 | A-5 | F-17 |
| H-20 | A-5 | F-18 |
| H-21 | A-5 | F-19 |
| H-22 | A-5 | F-20 |
| H-23 | A-5 | F-21 |
| H-24 | A-5 | F-22 |

| Block copolymer | The first segment | The second segment |
|---|---|---|
| H-25 | A-9 | F-1 |
| H-26 | A-9 | F-2 |
| H-27 | A-9 | F-3 |
| H-28 | A-9 | F-4 |
| H-29 | A-9 | F-9 |
| H-30 | A-9 | F-10 |
| H-31 | A-9 | F-17 |
| H-32 | A-9 | F-18 |
| H-33 | A-9 | F-19 |
| H-34 | A-9 | F-20 |
| H-35 | A-9 | F-21 |
| H-36 | A-9 | F-22 |

| Block copolymer | The first segment | The second segment |
|---|---|---|
| H-37 | A-13 | F-1 |
| H-38 | A-13 | F-2 |
| H-39 | A-13 | F-3 |
| H-40 | A-13 | F-4 |
| H-41 | A-13 | F-9 |
| H-42 | A-13 | F-10 |
| H-43 | A-13 | F-17 |
| H-44 | A-13 | F-18 |
| H-45 | A-13 | F-19 |
| H-46 | A-13 | F-20 |
| H-47 | A-13 | F-21 |
| H-48 | A-13 | F-22 |

| Block copolymer | The first segment | The second segment |
|---|---|---|
| H-49 | C-11 | F-1 |
| H-50 | C-11 | F-2 |
| H-51 | C-11 | F-3 |
| H-52 | C-11 | F-4 |
| H-53 | C-11 | F-9 |
| H-54 | C-11 | F-10 |
| H-55 | C-11 | F-17 |
| H-56 | C-11 | F-18 |
| H-57 | C-11 | F-19 |
| H-58 | C-11 | F-20 |
| H-59 | C-11 | F-21 |
| H-60 | C-11 | F-22 |

As a block copolymer, among combinations mentioned above, (H-2), (H-6), (H-11), (H-12), (H-14), (H-18), (H-23), (H-24), (H-26), (H-30), (H-35), (H-36), (H-38), (H-42), (H-47), (H-48), (H-50), (H-54) are preferable, and (H-47) or (H-48) is especially preferable.

As a block copolymer constituting polymer electrolyte, particularly those having the structure indicated by the following general formula (10a) or (10b) are suitable. In the following formulas, each of n and m is independently an integer of 5 to 200.

Particularly, the following block copolymers are preferably used.

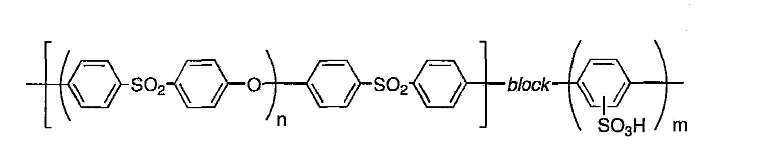

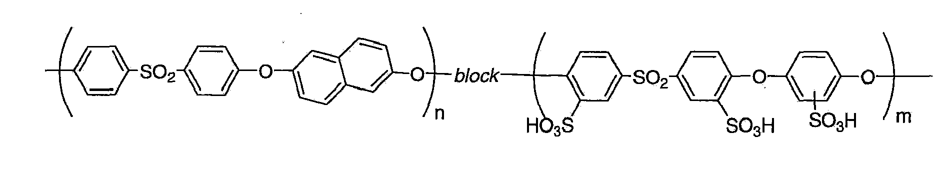

Though the mass composition ratio of the first segment and the second segment in a block copolymer thus obtained is not especially limited, in the unit of % by weight, the ratio of the first segment : the second segment is preferable to be 3 : 97 to 70 : 30, more preferable to be 5 : 95 to 60 : 40, further preferable to be 10 : 90 to 50 : 50, and especially preferable to be 20 : 80 to 40 : 60. It is preferable that the composition ratio of the segment having an ion-exchange group is in the above-mentioned range, because a polymer electrolyte membrane using the obtained block copolymer has high proton conductivity and its water resistance becomes better. And such a block copolymer suitably functions particularly as a polymer electrolyte membrane for a fuel cell.

Moreover, the average molecular weight of the first segment is preferable to be 2, 000 or more in the above-mentioned weight average molecular weight calculated in terms of polystyrene, more preferable to be 4,000 or more, further preferable to be 6, 000 or more, still more preferable to be 8, 000 or more, and especially preferable to be 10,000 or more. In addition, the upper limit value is preferable to be 200,000, more preferable to be 100,000, and further preferable to be 50, 000 . On the other hand, the average molecular weight of the second segment is preferable to be 2,000 or more in the above-mentioned weight average molecular weight determined in terms of polystyrene, more preferable to be 4,000 or more, further preferable to be 6,000 or more, still more preferable to be 8, 000 or more, further preferable to be 10, 000 or more, more preferable to be 40,000 or more, still more preferable to be 50,000 or more, and especially preferable to be 70,000 or more. In addition, the upper limit value is preferable to be 400, 000, more preferable to be 200, 000, and further preferable to be 100,000. In addition, the weight average molecular weight of each segment in the block copolymer can be found in such a way that either segment is selectively decomposed and the weight average molecular weight of the remained segment is measured with gel permeation chromatography, and the like.

Here, because the values of the average molecular weights of the first and the second segment correspond to the average molecular weights of the first and the second segment precursors (refer to COMPREHENSIVE POLYMER SCIENCE, The Synthesis Characterization, Reactions & Applications of Polymers Sir Geoffrey Allen Editor, Volume 6 Polymer Reactions, Chapter 11, Heterochain Block Copolymers pages 369-401, Pergaman Press pcl (1989)), as such values, the values of the average molecular weights of the first and second segment precursors can be applied directly.

Such the first segment is preferable to be 3.6 meq/g or more in ion-exchange capacity, more preferable to be 3.7 meq/g or more, further preferable to be 3.8 meq/g or more, still more preferable to be 3.9 meq/g or more, and especially preferable to be 4.0 meq/g or more. It is preferable that the ion-exchange capacity of the first segment precursor is 3.6 meq/g or more, because the polymer electrolyte membrane shows high proton conductivity in the wide range of temperature and humidity and consequently the electric power generation performance of the fuel cell will be improved. In addition, the ion-exchange capacity of the first segment can be found in some methods including the method that the second segment in the block copolymer is selectively decomposed and then the remained first segment is measured with the titration method and the like, and the method that the block copolymer is subjected to NMR measurement. In addition, because the molecular structure of the first segment is the same as that of the first segment precursor as described above, the ion-exchange capacity of the first segment precursor can be applied directly to the ion-exchange capacity of the first segment.

In addition, though the above-mentioned block copolymer is such one that has a segment having an ion-exchange group and a segment having substantially no ion-exchange group as described above, it may be any one of a block copolymer that has these segments one by one, a block copolymer having two or more of either segments, and a multi block copolymer having two or more of both segments, respectively.

Moreover, the block copolymer may has further a segment other than the above-mentioned two segments, for example, may have such a segment that the number of ion-exchange groups per one repeating unit is larger than 0.1 and smaller than 0.5 on average. Such segment can be introduced into a block copolymer by adding a high molecular compound meeting such ion-exchange group conditions as a raw material in the course of the block polymerization.

Hereinbefore, though a high molecular compound having ion conductive property, which is an ion conductive component contained in polymer electrolyte, has been described, the polymer electrolyte in the present embodiment may contain other components according to the desired properties in the range of not lowering the proton conductivity remarkably. As such other components, additives including plasticizers, stabilizers, mold lubricants, and water holding agents, all of which are used in common polymers.

For example, when polymer electrolyte is applied to a proton conductive membrane in a fuel cell, peroxide is produced in the catalyst layer adjacent to the proton conductive membrane during the operation of the fuel cell, and this peroxide changes into radical species while diffusing, which may deteriorate the polymer electrolyte constituting the proton conductive membrane. In this case, for avoiding such trouble, it is preferable to add a stabilizer, which can give radical resistance, to the polymer electrolyte.

Such stabilizers include for example, phenolic compounds such as 4,4'-butylidene bis(2-t-butyl-5-methylphenol) (manufactured by Sumitomo Chemical Co., Ltd., trade name: Sumilizer BBM-S), low molecular compounds such as compounds containing phosphorous atom like 2,4,8,10-tetra-t-butyl-6-[3-(3-methyl-4-hydroxy-5-t-butylph enyl)propoxy]dibenzo[d, f][1,3,2]dioxaphosphepin (manufactured by Sumitomo Chemical Co., Ltd., trade name: Sumilizer GP), or compounds containing sulfur atom like pentaerythrityl-tetrakis-(3-dodecyl thiopropionate) (manufactured by Sumitomo Chemical Co., Ltd., trade name: Sumilizer TP-D), and high molecular compounds having a functional group containing a hydroxyl group or phosphorus atom similarly to these low molecular compounds.

Among them, aromatic polymer phosphonic acids described in JP-A No. 2003-238678 and JP-A No. 2003-282096 in which a phosphonic acid group and the like are directly bonded to the aromatic ring are excellent as a stabilizer and can be suitably used. In addition, these aromatic polymer phosphonic acids can also function as polymer electrolyte. Consequently, for example, the compositions comprising this aromatic high molecular phosphonic acids and aromatic polymer having a sulfonic acid group as mentioned above are suitable as polymer electrolyte.

When an additive is thus added to polymer electrolyte, the amount added is preferable to be 0.1 % by weight to 50 % by weight in the total amount, more preferable to be 3 to 20 % by weight, and further preferable to be 5 to 15 % by weight. The amount of additives added is preferable to be in the above-mentioned range because the effect by such additives is sufficiently exhibited while maintaining the high proton conductivity of polymer electrolyte to be obtained.

### [Polymer electrolyte membrane]

Next, polymer electrolyte membranes relating to suitable embodiments will be described. Polymer electrolyte membranes in the present embodiments are those containing the above-mentioned polymer electrolyte in the embodiment and having a membranous structure. Polymer electrolyte membranes include, for example, polymer electrolyte formed to be membranous, and composite membranes obtained by compounding polymer electrolyte and a prescribed supporter.

The former polymer electrolyte membrane can be manufactured as follows: for example, a solution is made by dissolving polymer electrolyte in a prescribed solvent, and this solution is applied on a substrate by flow casting, after that, the solvent is removed. The thickness of the polymer electrolyte membrane can be controlled by adjusting the concentration of the solution and the thickness applied on the substrate.

The solvents include, for example, polar solvents such as N,N-dimethylformamide, N,N-dimethylacetamide, N-methyl-2-pyrrolidone, and dimethyl sulfoxide; halogenated solvents such as dichloromethane, chloroform, 1,2-dichloroethane, chlorobenzene, and dichlorobenzene; alcohols such as methanol, ethanol, and propanol; alkylene glycol monoalkyl ethers such as ethylene glycol monomethyl ether, ethylene glycol monoethyl ether, propylene glycol monomethyl ether, and propylene glycol monoethyl ether; and mixed solvents in which two kinds or more of these solvents are mixed. Among them, dimethylformamide, dimethylacetamide, N-methyl-pyrrolidone, dimethyl sulfoxide, dichloromethane /alcohol mixed solvents, or chloroform / alcohol mixed solvents are preferable because of being excellent in solubility for polymer electrolyte.

A substrate to be applied with the solution is needed to have resistance to solvents and be able to peel off the membrane after membrane manufacturing, for example, glass plates, PET (polyethylene terephthalate) films, stainless steel plates, stainless steel belts, silicon wafers, tetrafluoroethylene plates, and the like are listed. As for these substrates, the mold-releasing processing, the embossing finish, and the frosting may be processed to the surface if necessary.

The latter composite membrane can be manufactured, for example, by impregnating the polymer electrolyte solution as mentioned above on a supporter. The supporter is used to improve the strength, flexibility, and the like of the polymer electrolyte membrane. As a supporter, though any one of fibril form, porous membrane form, and the like can be applied without restriction according to these purposes, when being applied as a proton conductive membrane for a fuel cell, it is preferable to use a porous membrane to assure the excellent proton conductivity.

Here, as the porous membrane, those of 1 to 100 µm, preferably of 3 to 30 µm, and more preferably of 5 to 20 µm in membrane thickness, 0.01 to 10 µm and preferably 0.02 to 7 µm in pore diameter, and 20 to 98 % and preferably 30 to 95 % in voids are listed.

When the membrane thickness of this porous membrane is too thin, the effect of improving the strength, flexibility, durability, and the like of the polymer electrolyte membrane might not be achieved enough. On the other hand, when the membrane thickness is too thick, the electric resistance increases, and the proton conductivity of the obtained polymer electrolyte membrane might become insufficient. Moreover, when the pore diameter is too small, the impregnation of the polymer electrolyte membrane tends to become difficult. On the other hand, when the pore diameter is too large, the effect of reinforcing the polymer electrolyte membrane might not be achieved enough. Furthermore, when the voids are too small, the resistance of the polymer electrolyte membrane might be likely to increase in excess, and when it is too large, the strength of the porous membrane itself becomes weak and the effect of reinforcement might not be achieved enough.

As for the material of the porous membrane, aliphatic polymers or fluorine containing polymers are preferable from the standpoint of improving the thermal resistance and physical strength of the polymer electrolyte membrane. For example, though aliphatic polymers are not especially limited, they include polyethylene, polypropylene, and ethylene-propylene copolymers. In addition, polyethylene here is a generic name of ethylene polymers that has the crystal structure of polyethylene, for example, contains the copolymers of ethylene and other monomers. In concrete terms, this copolymers include copolymers of ethylene and α-olefin, referred to as linear low density polyethylene (LLDPE), and ultrahigh molecular weight polyethylene.

Moreover, polypropylene here is similarly a generic name of propylene polymers that have the crystal structure of polypropylene and includes propylene block copolymers and random copolymers.

Moreover, the fluorine containing polymers includes well-known thermoplastic resins (fluororesins) that have at least one carbon-fluorine bond within the molecule. Especially, those having such structures are suitable that most and preferably all of hydrogen atoms in an aliphatic polymer are replaced with fluorine atoms.

Such fluorine containing polymers include, for example, polytrifluoroethylene, polytetrafluoroethylene, polychlorotrifluoroethylene, poly(tetrafluoroethylene-hexafluoropropylene), poly(tetrafluoroethylene-perfluoroalkyl ether), and polyvinylidene fluoride. Among them, polytetrafluoroethylene or poly(tetrafluoroethylene-hexafluoropropylene) is preferable, and polytetrafluoroethylene is especially preferable. Moreover, as for these fluorine containing polymers, those having an average molecular weight of 100,000 or more is preferable from the standpoint of obtaining good mechanical strength. The polymer electrolyte membrane in the present embodiment that has such constitution is preferable to have the following characteristics. That is, when the prescribed length in one side is referred to as Lw when water adsorption is saturated at 80°C and the above-mentioned length in one side is referred to as Ld when water adsorption comes to equilibrium at 23°C and at a relative humidity of 50 %, it is preferable that (Lw - Ld)/Ld is 0.08 or less and the membrane resistance in the membrane thickness direction is 0.1 Ω·cm² or less at 23°C.

Here, "when water adsorption is saturated at 80°C" means a state that water is adsorbed in the polymer electrolyte membrane enough at 80°C and any more adsorption of water is not seen. For example, the state of "when water adsorption is saturated at 80°C" can be reached by dipping the polymer electrolyte membrane in water for one hour at 80°C. And, "when water adsorption comes to equilibrium at 23°C and at a relative humidity of 50 %" means a state that when the polymer electrolyte membrane is kept under such a condition, the amount of water adsorbed becomes almost constant and any more adsorption and desorption of water are not seen. In concrete terms, the state of "water adsorption is equilibrium at 23°C and at a relative humidity of 50 %" can be reached by drying the polymer electrolyte membrane in the above-mentioned saturated state enough at 23°C and at a relative humidity of 50 %.

Further, "the prescribed length in the surface direction" means the length of the segment that connects any two points set on the peripheral part of the polymer electrolyte membrane, and, for example, the length of any one side of the polymer electrolyte membrane corresponds to this.

Thus, when (Lw - Ld)/Ld (referred to as "the rate of dimensional change caused by water absorption") is 0.08 or less, because the difference in the dimensions of the polymer electrolyte membrane at the time when water is saturated at the temperature condition of 80°C near the operating condition of the fuel cell and at the time of usual conditions at 23°C and at a relative humidity of 50 % is extremely small, it becomes difficult to cause the deterioration such as breaking of the relevant polymer electrolyte membrane caused by the dimensional change by water absorption.

Moreover, when such polymer electrolyte membrane is applied to a proton conductive membrane for a fuel cell, it is also difficult to cause the breaking of the adjacent catalyst layer accompanying the dimensional change of the relevant polymer electrolyte membrane. On the other hand, when this rate of dimensional change caused by water absorption exceeds 0. 08, the dimensional change caused by water absorption becomes excessively large and it becomes easy to deteriorate the polymer electrolyte membrane.

From the standpoint of obtaining such effect sufficiently, the above-mentioned rate of dimensional change caused by water absorption is more preferable to be 0.05 or less and further preferable to be 0.04 or less. In addition, though such rate of dimensional change caused by water absorption only has to be realized in any one place in the surface direction in the polymer electrolyte membrane, it is more preferable when being realized in two or more places and further preferable when being realized in most places from the standpoint of improving the durability of the membrane further. In concrete terms, when being measured at two places in the prescribed surface direction and other different surface direction, it is suitable that the absolute value of the difference in the measured values of the rate of dimensional change caused by water absorption at the two places is 0.03 or less.

Moreover, as for the polymer electrolyte membrane in the present embodiment, the membrane resistance in the membrane thickness direction at 23°C is 0.1 Ω·cm² or less as mentioned above. Here, the membrane resistance in the membrane thickness direction means value of resistance per unit area measured by the alternating-current impedance method in 1 mol/L sulfuric acid along the membrane thickness direction. Such membrane resistance can be measured by the methods described in, for example, Desalination 147 (2002) 191 - 196 and Shin Jikken Kagaku Kouza (New Experimental Chemical Course) 19, Polymer chemistry (II), 992 p (compiled by The Chemical Society of Japan, Maruzen Co., Ltd.). In concrete terms, for example, polymer electrolyte that has been swelled in an aqueous sulfuric acid solution is put between two pieces of cells for measurement that a carbon electrode has been pasted on one side of silicon rubber (200 µm in thickness) having an opening of 1 cm², and the empty hole is filled with 1 mol/L sulfuric acid, and then the value of resistance is measured by the alternating-current impedance method.

When a polymer electrolyte membrane is the one having membrane resistance as mentioned above, it will show excellent proton conductivity even at a low humidification condition when being used for the proton conductive membrane of a fuel cell. A fuel cell having such a polymer electrolyte membrane as the proton conductive membrane will become possible to produce electric power at high efficiency. From the standpoint of obtaining more excellent proton conductivity, the above-mentioned membrane resistance is more preferable to be 0.08 Ω·cm² or less, and further preferable to be 0.05 Ω·cm² or less.

Now, though the membrane resistance of a polymer electrolyte membrane can be reduced even by thinning the membrane thickness, when being thinned too much, it is not preferable because the mechanical strength of the membrane weakens and the characteristic of intercepting the source gas becomes insufficient. The membrane thickness of the polymer electrolyte membrane is suitable to be 5 µm or more on conditions of 23°C and 50 % in relative humidity, more preferable to be 10 µm or more, and further preferable to be 15 µm or more. When the polymer electrolyte membrane is thicker than 5 µm, its breaking in the fuel cell decreases extremely because enough membrane strength can be obtained besides the handling ability becomes excellent. In addition, the membrane thickness of the polymer electrolyte membrane is preferable to be 100 µm or less on conditions of 23°C and 50 % in relative humidity, and more preferable to be 50 µm or less. When this membrane thickness is thinner than 100 µm, the membrane resistance of 0.1 Ω·cm² or less tends to be easily obtained.

### [Fuel cell]

Next, fuel cells having a polymer electrolyte membrane in suitable embodiments mentioned above will be described.

Fig. 1 is a diagram typically showing the cross sectional constitution of the fuel cell being concerned in preferred embodiment.

As shown in Fig. 1, in fuel cell 10, catalyst layers 14a and 14b, gas diffusion layers 16a and 16b, and separators 18a and 18b are sequentially formed on both sides of polymer electrolyte membrane 12 (proton conductive membrane) comprising the polymer electrolyte membrane in suitable embodiments mentioned above. Membrane-electrode assembly (hereinafter, abbreviated as "MEA") 20 is constituted from polymer electrolyte membrane 12 and one pair of catalyst layers 14a and 14b holding the membrane between them.

Catalyst layers 14a and 14b adjacent to polymer electrolyte membrane 12 are layers that function as electrode layers in the fuel cell, and either one of these layers becomes an anode electrode layer and the other becomes a cathode electrode layer. As such catalyst layers 14a and 14b, those formed from a catalyst composition containing polymer electrolyte relating to suitable embodiments mentioned above and a catalyst are suitable.

Catalysts are not especially limited as long as being able to activate the oxidation-reduction reaction with hydrogen or oxygen, and include, for example, noble metals, noble metal alloys, metal complexes, and baked metal complexes made by baking metal complexes. Among them, platinum minute particles are preferable as the catalyst, and catalyst layer 14a and 14b may be those that platinum minute particles are supported on particulate or fibrous carbon such as activated carbons and graphite.

Gas diffusion layers 16a and 16b are prepared so as to hold both sides of MEA 20 between them and accelerates the diffusion of the source gas into catalyst layers 14a and 14b. This gas diffusion layers 16a and 16b are preferable to be the ones comprising a porous material having electron conductivity. For example, porous carbon nonwoven fabric and carbon paper are preferable because they can transport the source gas into catalyst layers 14a and 14b effectively.

The membrane-electrodes (catalyst layers) -gas diffusion layers assembly (MEGA) comprises these polymer electrolyte membrane 12, catalyst layers 14a and 14b, and gas diffusion layers 16a and 16b. Such MEGA can be manufactured by, for example, the method shown below. That is, first, the slurry of a catalyst composition is formed by mixing a solution containing polymer electrolyte and a catalyst. This slurry is applied on carbon nonwoven fabric, carbon paper, or the like for forming gas diffusion layers 16a and 16b by the spray method or the screen printing method, and then the solvent and the like are evaporated to give a laminated material that a catalyst layer is formed on a gas diffusion layer. And, obtained one pair of laminated materials are arranged so that each catalyst layer is opposed together, and at the same time polymer electrolyte membrane 12 is arranged between the catalyst layers and these are subjected to pressure bonding. MEGA having the above-mentioned structure can be thus obtained. In addition, forming the catalyst layer on the gas diffusion layer can also carried out in such a way that, for example, the catalyst composition is applied on the prescribed substrate (polyimide, polytetrafluoroethylene and the like) and dried to form the catalyst layer, and then this layer is decaled on the gas diffusion layer with a heat press.

Separators 18a and 18b are formed with a material having electron conductivity, and such materials include, for example, carbon, resin mold carbon, titanium, and stainless steel. Such separators 18a and 18b are preferable when ditches that work as the flow channels for the fuel gas and the like are formed on the sides facing catalyst layers 14a and 14b.

And, fuel cell 10 can be obtained by holding MEGA as described above between one pair of separators 18a and 18b and assembling these.

In addition, the fuel cell of the present invention is not necessarily limited to the one having the above-mentioned constitution and may have properly any different constitution within the range not being deviated from the purport. For example, though in the above-mentioned fuel cell 10, the polymer electrolyte of the present invention is contained in both of polymer electrolyte membrane 12 and catalyst layers 14a and 14b, not limited to this, the polymer electrolyte has only to be contained in any one. However, from the standpoint of obtaining a high efficient fuel cell, the polymer electrolyte is preferable to be contained in both of these.

Moreover, fuel cell 10 may be the one that the fuel cell having the structure described above is sealed with gas sealing material and the like. Further, as for fuel cell 10 having the above-mentioned structure, plural ones can be connected in series and put to practical use as a fuel-cell stack. And, a fuel cell having such constitution can operate as a solid polymer type fuel cell when the fuel is hydrogen, and as a direct methanol type fuel cell when the fuel is an aqueous methanol solution.

Hereinafter, though the present invention will be further described in detail with reference to examples, the present invention should not be limited to these examples. [Synthesis of 4,4'-difluorodiphenylsulfone-3,3'-dipotassium disulfonate]

First, 4,4'-difluorodiphenylsulfone-3,3'-dipotassium disulfonate to be used for each synthesis described later was synthesized as shown below. That is, first, 467 g of 4,4'-difluorodiphenylsulfone and 3,500 g of 30 % fuming sulfuric acid were added in a reactor with a stirrer and reacted at 100°C for five hours. After the obtained reaction mixture was cooled, the mixture was added in a large amount of ice water, and further 470 mL of 50 % aqueous potassium hydroxide solution was dropped in the mixture.

Next, the precipitated solids were filtered and collected, and after being washed with ethanol, they were dried. The obtained solids were dissolved in 6.0 L of deionized water, and after the solution was adjusted to pH7.5 by adding 50 % aqueous potassium hydroxide solution, 460 g of potassium chloride was added. The precipitated solids were filtered and collected, and after being washed with ethanol, they were dried.

After that, the obtained solids were dissolved in 2.9 L of DMSO, insoluble inorganic salts were removed by filtration, and the residue was further washed with 300 mL of DMSO. In the obtained filtrate, 6. 0 L of a solution of ethyl acetate / ethanol = 24 / 1 was dropped. The precipitated solids were washed with methanol and dried at 100°C, and 482 g of solid 4,4'-difluorodiphenylsulfone-3,3'-dipotassium disulfonate was thus obtained.

### [Synthesis of polymer electrolyte]

### (Synthesis example 1)

In a flask with an azeotropic distillation apparatus, 65.22 g of 4,4'-difluorodiphenylsulfone, 42.63 g of 2,6-dihydroxynaphthalene (Dainippon Ink And Chemicals, Incorporated), 608 g of N-methyl-pyrrolidone (NMP), and 99 g of toluene were added under an argon atmosphere, and argon gas was bubbled for one hour while stirring at room temperature. After that, 40.45 g of potassium carbonate was added and subjected to azeotropic dehydration by heating at 140°C while stirring. After that, heating was continued while distilling and removing toluene and polymer J1 was obtained. Total heating time was five hours. The reaction liquid of the obtained polymer J1 was let alone and cooled at room temperature, and then used in the next reaction.

When weight average molecular weight (Mw) and number average molecular weight (Mn) of Polymer J1 were measured respectively, Mw was 8.3×10⁴ and Mn was 4.6×10⁴. These values are the values obtained by measuring with gel permeation chromatography (GPC) under the following condition and converted with respect to polystyrene standard. In addition, also in the following examples, all of Mws and Mns of polymers were determined in the same way.

### GPC conditions

·GPC measurement apparatus: HLC-8220 manufactured by TOSOH Corporation
·Column: Two AT-80Ms manufactured by Shodex Corp. were connected in series
·Column temperature: 40°C
·Mobile phase solvent: DMAc (LiBr was added so as to be 10 mmol/dm³)
·Flow rate of solvent: 0.5 mL/min.
   Moreover, in a flask with an azeotropic distillation apparatus, 75.37 g of 4,4'-difluorodiphenylsulfone-3,3'- dipotassium disulfonate, 32.01 g of 2,5-dihydroxybenzene potassium sulfonate (Samsong Chemical Industries, Co., Ltd.), 602 g of dimethyl sulfoxide, and 95 g of toluene were added under an argon atmosphere, and argon gas was bubbled for one hour while stirring at room temperature. After that, 20.34 g of potassium carbonate was added and subjected to azeotropic dehydration by heating at 140°C while stirring. After that, heating was continued while distilling and removing toluene and polymer K1 was obtained. The total heating time was 14 hours. The reaction liquid of the obtained polymer K1 was cooled to room temperature, and used in the next process directly.

After that, the total amount of polymer J1 and 300 g of dimethylsulfoxide (DMSO) were added in the reaction liquid of the obtained polymer K1 while stirring, and then the mixture temperature was raised and the mixture was heated and stirred at 150°C for 84 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the following chemical formula (3) that is a block copolymer was obtained. In addition, the description of "block" in the following formula indicates that the block copolymer has one or more of the segment derived from the first segment precursor and the segment derived from the second segment precursor, respectively. In addition, when the ion-exchange capacity in such segment was found by calculation from the structural unit constituting the segment derived from the first high molecular compound, it was 5.3 meq/g.

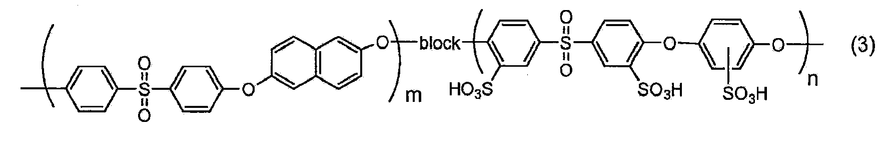

### (Synthesis example 2)

In a flask with an azeotropic distillation apparatus, 83.70 g of 4,4'-difluorodiphenylsulfone, 53.31 g of 2,6-dihydroxynaphthalene, 606 g of NMP, and 102 g of toluene were added under an argon atmosphere, and argon gas was bubbled for one hour while stirring at room temperature. After that, 52.44 g of potassium carbonate was added and subjected to azeotropic dehydration by heating at 140°C while stirring. After that, heating was continued while distilling and removing toluene and polymer J2 was obtained. The total heating time was 16.5 hours. Mw of polymer J2 was 1.1×10⁵, and Mn was 5.0×10⁴. The reaction liquid of the obtained polymer J2 was let alone and cooled at room temperature, and then used in the next reaction.

Moreover, in a flask with an azeotropic distillation apparatus, 98.53 g of 4,4'-difluorodiphenylsulfone-3,3'-dipotassium disulfonate, 40.01 g of 2,5-dihydroxybenzene potassium sulfonate, 600 g of dimethyl sulfoxide, and 94 g of toluene were added under an argon atmosphere, and argon gas was bubbled for one hour while stirring at room temperature. After that, 25.43 g of potassium carbonate was added and subjected to azeotropic dehydration by heating at 140°C while stirring. After that, heating was continued while distilling and removing toluene and polymer K2 was obtained. The total heating time was made to be 17 hours.

Mw of polymer K2 was 4.6X10⁴, and Mn was 3.1×10⁴. The reaction liquid of the obtained polymer B2 was cooled to room temperature.

After that, the total amount of polymer J2, 452 g of DMSO, and 255 g of NMP were added in the reaction liquid of the obtained polymer K2 while stirring, and then the mixture temperature was raised and the mixture was heated and stirred at 150°C for 49 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 3)

In a flask with an azeotropic distillation apparatus, 249.01 g of 4,4'-difluorodiphenylsulfone, 164.60 g of 2,6-dihydroxynaphthalene, 902 g of NMP, and 294 g of toluene were added under an argon atmosphere, and argon gas was bubbled for one hour while stirring at room temperature. After that, 156.1 g of potassium carbonate was added and subjected to azeotropic dehydration by heating at 140°C while stirring. After that, heating was continued while distilling and removing toluene and polymer J3 was obtained. The total heating time was 18.5 hours. Mw of polymer J3 was 7.4×10⁴, and Mn was 4.0×10⁴. The reaction liquid of the obtained polymer J3 was let alone and cooled at room temperature, and then used in the next reaction.

Moreover, in a flask with an azeotropic distillation apparatus, 284.3 g of 4,4'-difluorodiphenylsulfone-3,3'-dipotassium disulfonate, 120.0 g of 2,5-dihydroxybenzene potassium sulfonate, 1778 g of dimethyl sulfoxide, and 279 g of toluene were added under an argon atmosphere, and argon gas was bubbled for one hour while stirring at room temperature. After that, 76.29 g of potassium carbonate was added and subjected to azeotropic dehydration by heating at 140°C while stirring. After that, heating was continued while distilling and removing toluene and polymer K3 was obtained. The total heating time was made to be 16 hours . Mw of polymer K3 was 4.9×10⁴, and Mn was 3.0×10⁴. The reaction liquid of the obtained polymer K3 was cooled to room temperature.

After that, the total amount of polymer J3, 610 g of DMSO, and 1790 g of NMP were added in the reaction liquid of the obtained polymer K3 while stirring, and then the mixture temperature was raised and the mixture was heated and stirred at 150°C for 39 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 4)

In a flask with an azeotropic distillation apparatus, 40.65 g of 4,4'-difluorodiphenylsulfone, 26.69 g of 2, 6-dihydroxynaphthalene, 144 g of NMP, and 47 g of toluene were added under an argon atmosphere, and argon gas was bubbled for one hour while stirring at room temperature. After that, 24.24 g of potassium carbonate was added and subjected to azeotropic dehydration by heating at 100°C while stirring.

After that, heating was continued while distilling and removing toluene and polymer J4 was obtained. The total heating time was 13.5 hours. Mw of polymer J4 was 1.1×10⁵, and Mn was 5.6×10⁴. The reaction liquid of the obtained polymer J4 was let alone and cooled at room temperature, and then used in the next reaction.

Moreover, in a flask with an azeotropic distillation apparatus, 45.79 g of 4,4'-difluorodiphenylsulfone-3,3'-dipotassium disulfonate, 20.01 g of 2,5-dihydroxybenzene potassium sulfonate, 285 g of dimethyl sulfoxide, and 45 g of toluene were added under an argon atmosphere, and argon gas was bubbled for one hour while stirring at room temperature. After that, 12.71 g of potassium carbonate was added and subjected to azeotropic dehydration by heating at 140°C while stirring. After that, heating was continued while distilling and removing toluene and polymer K4 was obtained. The total heating time was 21 hours.

Mw of polymer K4 was 8.0×10⁴, and Mn was 4.5×10⁴. The reaction liquid of the obtained polymer K4 was cooled to room temperature.

After that, the total amount of polymer J4, 96 g of DMSO, and 286 g of NMP were added in the reaction liquid of the obtained polymer K4 while stirring, and then the temperature was raised and the mixture was heated and stirred at 150°C for 41 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 5)

In a flask with an azeotropic distillation apparatus, 1500.0 g of Sumikaexcel PES4003P (manufactured by Sumitomo Chemical Co., Ltd., hydroxyl group type polyether sulfone, Mn = 39,000), 25.39 g of potassium carbonate, 6,000 mL of N,N-dimethylacetamide, and 1,000 mL of toluene were added and subjected to azeotropic dehydration by heating at 150°C while stirring, and then toluene was distilled and removed. After that, the obtained reaction liquid was let alone and cooled at room temperature, and then 136.42 g of decafluorobiphenyl (APOLLO SCIENTIFIC Corp.) was added and heated while stirring at 50°C for one hour, at 80°C for two hours, and at 100°C for one hour.

After the obtained reaction liquid was let alone and cooled, this reaction liquid was dropped in a large amount of the mixed solution of concentrated hydrochloric acid/methanol/acetone (volume ratio of 1/20/10), and precipitates produced in the mixed solution was filtered and recovered. This precipitates was dissolved in N, N-dimethylacetamide so that the concentration became 14 % by weight, and the obtained solution was dropped again in a large amount of the mixed solution of concentrated hydrochloric acid/methanol/acetone (volume ratio of 1/20/10). The produced precipitates were washed with water, and then dried at 80°C and compound J5 indicated by the following chemical formula (4) was obtained.

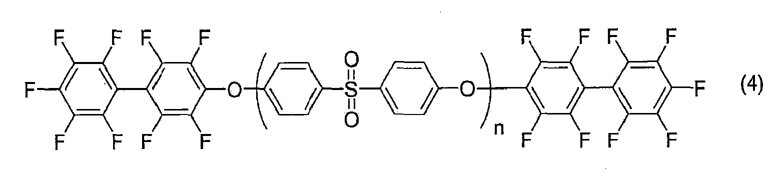

Moreover, in a flask with an azeotropic distillation apparatus, 120.4 g of 2,5-dihydroxybenzene potassium sulfonate, 600 g of DMSO, and 120 g of toluene were added under an argon atmosphere, and argon gas was bubbled for one hour while stirring at room temperature. After that, 78.63 g of potassium carbonate was added and subjected to azeotropic dehydration by heating at 140°C while stirring, and thus a solution containing monomer K51 was obtained.

Further, in another flask with an azeotropic distillation apparatus, 256.3 g of 4,4'-difluorodiphenylsulfone-3,3'-dipotassium disulfonate, 900 g of DMSO, and 180 g of toluene were added under an argon atmosphere and subj ected to azeotropic dehydration by heating at 140°C while stirring, and thus a solution containing monomer K52 was obtained.

After that, in another flask with an azeotropic distillation apparatus, 40.00 g of compound A5, 1, 800 g of DMSO, and 300 g of toluene were added under an argon atmosphere and subjected to azeotropic dehydration by heating at 140°C while stirring, and thus a solution containing polymer J5 was prepared.

Then, the solution containing monomer K52 was added in the solution containing monomer K51 at room temperature, and heated at 150°C for six hours while stirring. After the obtained reaction liquid was let alone and cooled to room temperature, polymers J5 as prepared above were added to this reaction liquid, and heated at 80°C for ten hours, and at 120°C for 18 hours while stirring. After the obtained reaction liquid was let alone and cooled to room temperature, produced polymers were precipitated in a large amount of water, and then the precipitates were filtered. The obtained precipitates were dipped in a large amount of 1N hydrochloric acid all night, the precipitates were filtered and washed with water, and then dipped in a large amount of hot water at 95°C for 30 minutes. After the precipitates thus obtained were dipped again in hot water for 30 minutes, dried at 80°C all night and polymer electrolyte indicated by the following chemical formula (5) that is a block copolymer was obtained. In addition, when the ion-exchange capacity in such segment was found by calculation from the structural unit constituting the segment derived from the first polymer, it was 5.3 meq/g.

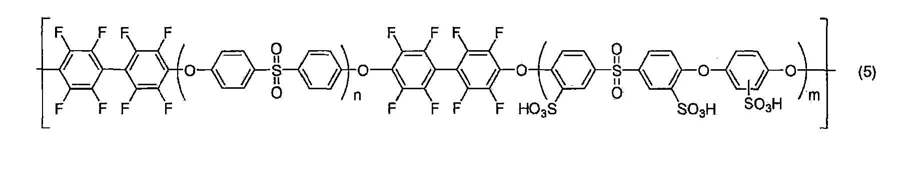

### (Synthesis example 6)

In a flask with an azeotropic distillation apparatus, 327.3 g of 4,4'-difluorodiphenylsulfone-3,3'- dipotassium disulfonate, 125.1 g of 2,5-dihydroxybenzene potassium sulfonate, 1971 g of DMSO, and 310 g of toluene were added under an argon atmosphere, and argon gas was bubbled for one hour while stirring at room temperature. After that, 79.47 g of potassium carbonate was added and subjected to azeotropic dehydration by heating at 140°C while stirring. After that, heating was continued while distilling and removing toluene and polymer K6 was obtained. The total heating time was made to be 15 hours. Mw of polymer K6 was 3.6×10⁴, and Mn was 2.8×10⁴. The reaction liquid of the obtained polymer K6 was cooled to room temperature and used in the next reaction.

Moreover, in a flask with an azeotropic distillation apparatus, 304.6 g of 4,4'-difluorodiphenylsulfone, 206.4 g of 2,6-dihydroxynaphthalene, 2228 g of DMSO, and 350 g of toluene were added under an argon atmosphere, and argon gas was bubbled for one hour while stirring at room temperature. After that, 195.7 g of potassium carbonate was added and subjected to azeotropic dehydration by heating at 140°C while stirring. After that, heating was continued while distilling and removing toluene and polymer J6 was obtained. The total heating time was made to be six hours. Mw of polymer J6 was 3.7×10⁴, and Mn was 2.2x10⁴. The reaction liquid of the obtained polymer J6 was let alone and cooled at room temperature.

After that, the total amount of polymer K6 and 500 mL of NMP were added in the reaction liquid of the obtained polymer J6 while stirring, and then the mixture was heated and stirred for two hours, after that the temperature was raised to 150°C and the mixture was stirred at 150°C for six hours.

The reaction liquid after stirring was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour. And the obtained precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 7)

In a flask with an azeotropic distillation apparatus, 313.4 g of 4,4'-difluorodiphenylsulfone-3,3'- dipotassium disulfonate, 120.0 g of 2,5-dihydroxybenzene potassium sulfonate, 1892 g of DMSO, and 297 g of toluene were added under an argon atmosphere, and argon gas was bubbled for one hour while stirring at room temperature. After that, 76.29 g of potassium carbonate was added and subjected to azeotropic dehydration by heating at 140°C while stirring. After that, heating was continued while distilling and removing toluene, and polymer K7 was obtained. The total heating time was made to be 14 hours. Mw of polymer K7 was 3.6x10⁴, and Mn was 2.8x10⁴. The reaction liquid of the obtained polymer K7 was cooled to room temperature and used in the next reaction.

Moreover, in a flask with an azeotropic distillation apparatus, 292.3 3 g of 4,4'-difluorodiphenylsulfone, 198.2 g of 2,6-dihydroxynaphthalene, 1070 g of DMSO, 1070 g of NMP, and 348 g of toluene were added under an argon atmosphere, and argon gas was bubbled for one hour while stirring at room temperature. After that, 188.0 g of potassium carbonate was added and subjected to azeotropic dehydration by heating at 140°C while stirring. After that, heating was continued while distilling and removing toluene and polymer J7 was obtained. The total heating time was five hours. Mw of polymer J7 was 3.7x10⁴, and Mn was 2.3x10⁴. The reaction liquid containing the obtained polymer J7 was let alone and cooled at room temperature.

After that, the total amount of polymer K7 was added in the reaction liquid of the obtained polymer J7 while stirring, and then the temperature was raised to 150°C and the mixture was stirred for 41 hours.

The reaction liquid after stirring was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour. And the obtained precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 8)

In a flask with an azeotropic distillation apparatus, 313.4 g of 4,4'-difluorodiphenylsulfone-3,3'- dipotassium disulfonate, 120.0 g of 2,5-dihydroxybenzene potassium sulfonate, 1892 g of DMSO, and 297 g of toluene were added under an argon atmosphere, and argon gas was bubbled for one hour while stirring at room temperature. After that, 76.29 g of potassium carbonate was added and subjected to azeotropic dehydration by heating at 1.40°C while stirring. After that, heating was continued while distilling and removing toluene, and polymer K8 was obtained. The total heating time was 14 hours. Mw of polymer K8 was 3.6×10⁴, and Mn was 2.7×10⁴. The reaction liquid of the obtained polymer K8 was cooled to room temperature and used in the next reaction.

Moreover, in a flask with an azeotropic distillation apparatus, 259.4 g of 4,4'-difluorodiphenylsulfone, 177.8 g of 2,6-dihydroxynaphthalene, 953 g of DMSO, 953 g of NMP, and 310 g of toluene were added under an argon atmosphere, and argon gas was bubbled for one hour while stirring at room temperature. After that, 168.6 g of potassium carbonate was added and subjected to azeotropic dehydration by heating at 140°C while stirring. After that, heating was continued while distilling and removing toluene, and polymer J8 was obtained. The total heating time was five hours. Mw of polymer J8 was 3.1×10⁴, and Mn was 1.9×10⁴. The reaction liquid containing the obtained polymer J8 was let alone and cooled at room temperature.

After that, the total amount of polymer K8 was added in the reaction liquid of the obtained polymer J8 while stirring, and then the temperature was raised to 130°C and the mixture was stirred for 6.5 hours, and further the temperature was raised to 140°C and the mixture was stirred for 33.5 hours.

The reaction liquid after stirring was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour and the produced precipitates were filtered and collected. And the obtained precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 9)

In a flask with an azeotropic distillation apparatus, 40.48 g of 4,4'-difluorodiphenylsulfone, 26.25 g of 2,6-dihydroxynaphthalene, 144 g of NMP, and 144 g of toluene were added under an argon atmosphere, and argon gas was bubbled for one hour while stirring at room temperature. After that, 24.14 g of potassium carbonate was added and subjected to azeotropic dehydration by heating at 100°C while stirring. After that, heating was continued while distilling and removing toluene, and polymer J9 was obtained. The total heating time was 10 hours. Mw of polymer J9 was 2.0×10⁵, and Mn was 1.0×10⁵. The reaction liquid of the obtained polymer J9 was let alone and cooled at room temperature, and then used in the next reaction.

Moreover, in a flask with an azeotropic distillation apparatus, 45.57 g of 4,4'-difluorodiphenylsulfone-3,3'-dipotassium disulfonate, 20.02 g of 2,5-dihydroxybenzene potassium sulfonate, 284 g of dimethyl sulfoxide, and 45 g of toluene were added under an argon atmosphere, and argon gas was bubbled for one hour while stirring at room temperature. After that, 12.71 g of potassium carbonate was added and subjected to azeotropic dehydration by heating at 150°C while stirring. After that, heating was continued while distilling and removing toluene, and polymer K9 was obtained. The total heating time was made to be 37.5 hours. Mw of polymer K9 was 1.2×10⁵ and Mn was 5.4×10⁴. The reaction liquid of the obtained polymer K9 was cooled to room temperature.

After that, the total amount of polymer J9, 96 g of DMSO, and 280 g of NMP were added in the reaction liquid of the obtained polymer K9 while stirring, and then the temperature was raised and the mixture was heated and stirred at 150°C for 42.5 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the above-mentioned chemical formula (3) that is a block copolymer was obtained.

### (Synthesis example 10)

In a flask with an azeotropic distillation apparatus, 40.30 g of 4,4'-difluorodiphenylsulfone, 26.25 g of 2,6-dihydroxynaphthalene, 143 g of NMP, 143 g of DMSO, and 47 g of toluene were added under an argon atmosphere, and argon gas was bubbled for one hour while stirring at room temperature. After that, 24.03 g of potassium carbonate was added and subjected to azeotropic dehydration by heating at 100°C while stirring. After that, heating was continued while distilling and removing toluene, and polymer J10 was obtained. The total heating time was made to be 12 hours. Mw of polymer J10 was 1.9×10⁵, and Mn was 9.8×10⁴. The reaction liquid of the obtained polymer J10 was let alone and cooled at room temperature, and then used in the next reaction.

Moreover, in a flask with an azeotropic distillation apparatus, 45.26 g of 4,4'-difluorodiphenylsulfone-3,3'-dipotassium disulfonate, 20.01 g of 2,5-dihydroxybenzene potassium sulfonate, 283 g of dimethyl sulfoxide, and 74 g of toluene were added under an argon atmosphere, and argon gas was bubbled for one hour while stirring at room temperature. After that, 12.71 g of potassium carbonate was added and subjected to azeotropic dehydration by heating at 140°C while stirring. After that, heating was continued while distilling and removing toluene, and polymer K10 was obtained. The total heating time was 21 hours. Mw of polymer K10 was 1.3×10⁵ and Mn was 5.8×10⁴. The reaction liquid of the obtained polymer K10 was cooled to room temperature.

After that, the total amount of polymer J10, 97 g of DMSO, and 285 g of NMP were added in the reaction liquid of the obtained polymer K10 while stirring, and then the temperature was raised and the mixture was heated and stirred at 150°C for 42.5 hours.

After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and produced precipitates were filtered and collected. After that, the precipitates were dried at 80°C all night, and polymer electrolyte indicated by the above-mentioned chemical formula (3) that is a block copolymer was obtained. In addition, when the ion-exchange capacity in such segment was found by calculation from the structural unit constituting the segment derived from the first polymer, it was 5.3 meq/g.

### (Synthesis example 11)

Under a nitrogen atmosphere, in a reactor, 2.10 parts by weight of polyether sulfone having a terminal Cl group (manufactured by Sumitomo Chemical Co., Ltd., Sumikaexcel PES5200P, Mn = 5.2×10⁴, Mw = 8.8×10⁴), 5.70 parts by weight of 2, 5-dichlorobenzene sodium sulfonate, 9.32 parts by weight of 2,2-bipyridyl, 142.23 parts by weight of dimethyl sulfoxide, and 55.60 parts by weight of toluene were put and stirred. Next, the internal pressure in the reactor was reduced to 10 kPa and the internal temperature was raised up to 60 to 70°C, and the mixture was refluxed and dehydrated for eight hours. After the dehydration, toluene was distilled and removed, and 15.407 parts by weight of bis (1, 5-cyclooctadiene) nickel (0) was added in the state of keeping the internal temperature at 65°C. After the addition, the mixture was stirred at the internal temperature of 70°C for five hours. After the reaction liquid was cooled to room temperature, the polymer was precipitated into methanol and further washed with 6N hydrochloric acid and water to give polymer electrolyte indicated by the following chemical formula (10a) that is a block copolymer. In addition, when the ion-exchange capacity in such segment was found by calculation from the structural unit constituting the segment derived from the first polymer, it was 6.4 meq/g.

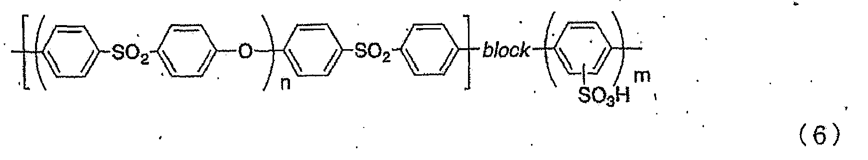

### (Synthesis example 12)

Under an argon atmosphere, in a flask with an azeotropic distillation apparatus, 200 mL of DMSO, 80 mL of toluene, 8.5 g (34.2 mmol) of 2,5-dichlorobenzene sodium sulfonate, 2.8 g of polyether sulfone having a terminal Cl group (manufactured by Sumitomo Chemical Co., Ltd., Sumikaexcel PES7600P, Mn = 7.9×10⁴, Mw = 1.4×10⁵), and 13.4 g (86.1 mmol) of 2,2-bipyridyl were put and stirred. Next, the internal temperature was raised up to 140°C. The mixture was heated for five hours and refluxed at the temperature and coexisting water was removed by azeotropic dehydration. After that, toluene was distilled and removed for two hours, and the mixture was let alone and cooled to 70°C. Next, 24.1 g (87.7 mmol) of bis(1,5-cyclooctadiene)nickel (0) was added, and the mixture was heated and stirred at the internal temperature of 70°C for three hours. After being let alone and cooled, the reaction liquid was poured in a large amount of methanol to precipitate polymers, and further the polymers were filtered. After that, as for the polymers, the operation of washing with 6 mol/L hydrochloric acid and filtering was repeated several times, and then the polymers were washed with water until the filtrate became neutral and further dried under reduced pressure. Herewith, 4.0 g of polymer electrolyte indicated by the above-mentioned chemical formula (10a) that is a block copolymer was obtained. In addition, when the ion-exchange capacity in such segment was found by calculation from the structural unit constituting the segment derived from the first polymer, it was 6.4 meq/g.

### (Synthesis example 13)

Under an argon atmosphere, in a flask with an azeotropic distillation apparatus, 140 mL of DMSO, 60 mL of toluene, 5.2 g (21.0 mmol) of 2,5-dichlorobenzene sodium sulfonate, 2.8 g of polyether sulfone having a terminal Cl group (manufactured by Sumitomo Chemical Co., Ltd., Sumikaexcel PES3100P, Mn = 3.0×10⁴, Mw = 4.9×10⁴), and 8.8 g (56.0 mmol) of 2,2-bipyridyl were put and stirred. Next, the bath temperature was raised up to 150°C, and moisture in the system was subjected to azeotropic dehydration by distilling and removing toluene, and then the mixture was cooled to 65°C. Next, 14.7 g (53.4 mmol) of bis(1,5-cyclooctadiene)nickel (0) was added, and the temperature was raised to 70°C and the mixture was heated at this temperature for five hours. After being let alone and cooled, the reaction liquid was poured in a large amount of methanol to precipitate polymers, and further the polymers were filtered. After that, as for the polymers, the operation of washing with 6 mol/L hydrochloric acid and filtering was repeated several times, and then the polymers were washed with water until the filtrate became neutral and further dried under reduced pressure. Herewith, 4.8 g of polymer electrolyte indicated by the above-mentioned chemical formula (10a) that is a block copolymer was obtained. In addition, when the ion-exchange capacity in such segment was found by calculation from the structural unit constituting the segment derived from the first polymer, it was 6.4 meq/g.

### (Synthesis example 14)

In a flask with a reduced-pressure azeotropic distillation apparatus, 16.86 g of 4,4'-difluorodiphenylsulfone, 10.91 g of 2,6-dihydroxynaphthalene, 61 g of NMP, 61 g of DMSO, and 42 g of toluene were added under an argon atmosphere, and argon gas was bubbled for one hour while stirring at room temperature. After that, 10.10 g of potassium carbonate was added and subjected to azeotropic dehydration by heating at 120°C while stirring. After that, heating was continued while distilling and removing toluene, and polymer J11 was obtained. The total heating time was made to be 10 hours. Mw of J11 was 7.9×10⁴, and Mn was 2.8×10⁴. The reaction liquid of the obtained J11 was let alone and cooled at room temperature, and then used in the next reaction.

Moreover, in a flask with a reduced-pressure azeotropic distillation apparatus, 28.47 g of 4,4'-difluorodiphenylsulfone-3,3'- dipotassium disulfonate, 9.01 g of 2, 6-dihydroxynaphthalene, 165 g of dimethyl sulfoxide, and 48 g of toluene were added under an argon atmosphere, and argon gas was bubbled for one hour while stirring at room temperature. After that, 8.34 g of potassium carbonate was added and subjected to azeotropic dehydration by heating at 120°C for eight hours while stirring. After that, toluene was distilled and removed, and the temperature of the mixture was raised to 140°C and the heating was continued for eight hours, and polymer K11 was thus obtained. Mw of K11 was 2.2×10⁵ and Mn was 8.0×10⁴. The reaction liquid of the obtained K11 was cooled to room temperature.

After that, the total amount of K11, 65 g of DMSO, and 135 g of NMP were added in the reaction liquid of the obtained J11 while stirring, and then the temperature was raised and the mixture was heated and stirred at 135°C for 35 hours. After the reaction liquid after stirring was let alone and cooled, this reaction liquid was dropped in a large amount of 2N hydrochloric acid and dipped for one hour as it was. After precipitates produced in the reaction liquid was filtered, the precipitates were dipped again in 2N hydrochloric acid for one hour. The precipitates were filtered and washed with water, and then dipped in a large amount of hot water at 95°C for one hour, and the precipitates were filtered and collected. After that, the precipitates were dried at 80°C all night, and polymer electrolyte indicated by the following formula that is a block copolymer was obtained. In addition, when the ion-exchange capacity in such segment was found by calculation from the structural unit constituting the segment derived from the first polymer, it was 3.7 meq/g.

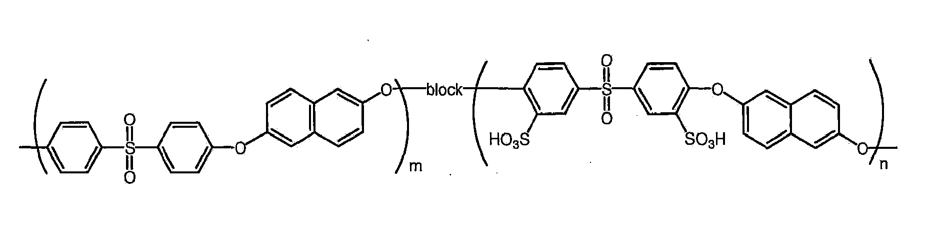

### [Measurement of ion-exchange capacity and reduced viscosity]

With the use of each polymer electrolyte that had been obtained in Synthesis examples 1 to 14, the ion-exchange capacity and the reduced viscosity were measured as described below.

That is, first, a polymer electrolyte was dissolved in N-methyl-pyrrolidone (NMP) or dimethyl sulfoxide (DMSO) so that the concentration became to be about 10 to 30 % by weight to prepare the polymer electrolyte solution. After this polymer electrolyte solution was applied and spread on a glass plate, the plate was dried at 80°C and at atmospheric pressure to give a polymer electrolyte membrane. After the obtained membrane was dipped in 2N hydrochloric acid for two hours, the ion-exchange groups in the polymer electrolyte membrane were converted into the proton types and then the membrane was washed with ion-exchange water. Next, the polymer electrolyte membrane was further dried at 105°C by using a halogen moisture percentage meter, and the oven dry weight of the polymer electrolyte membrane converted into the proton type was found.

After that, this polymer electrolyte membrane was dipped in 5 mL of a 0.1 mol/ L aqueous sodium hydroxide solution, and then 50 mL of ion-exchange water was added and the mixture was let alone for two hours. After that, the titration was carried out by gradually adding 0.1 mol/L hydrochloric acid in the solution in which this polymer electrolyte membrane was dipped, and the point of neutralization was found. And, the ion-exchange capacity of the polymer electrolyte membrane was calculated from the oven dry weight of the polymer electrolyte membrane and the amount of hydrochloric acid required for the above-mentioned neutralization.

Moreover, 0.1 g of the polymer electrolyte was dissolved in 9.9 g of N-methyl-pyrrolidone or dimethyl sulfoxide to prepare 1 % by weight solution, and the reduced viscosity (mL / g) of the obtained solution was measured at 40°C by the use of Uberohde viscometer. The obtained results are collectively shown in Table 6.

**Table 6**

| Polymer electrolyte | Ion-exchange capacity of polymer electrolyte (meq/g) | Reduced viscosity (mL/g) | Solvent for viscosity measurement |
|---|---|---|---|
| Synthesis example 1 | 1.7 | 162 | NMP |
| Synthesis example 2 | 1.7 | 164 | NMP |
| Synthesis example 3 | 1.9 | 185 | NMP |
| Synthesis example 4 | 1.9 | 234 | NMP |
| Synthesis example 11 | 2.2 | 240 | DMSO |
| Synthesis example 12 | 2.0 | 217 | DMSO |
| Synthesis example 13 | 2.7 | 297 | DMSO |
| Synthesis example 14 | 1.9 | 176 | NMP |
| Synthesis example 5 | 1.3 | 538 | DMF |
| Synthesis example 6 | 1.8 | 118 | NMP |
| Synthesis example 7 | 2.0 | 109 | NMP |
| Synthesis example 8 | 2.1 | 121 | NMP |
| Synthesis example 9 | 1.3 | 213 | NMP |
| Synthesis example 10 | 1.6 | 185 | NMP |

### [Preparation of additives]

### (Preparation example 1)

In conformity to the method described in reference examples of JP-A No. 2005-38834, a random copolymer indicated by the following chemical formula (7) was obtained by reacting 4,4'-dihydroxydiphenyl sulfone, 4,4'-dihydroxybiphenyl, and 4,4'-dichlorodiphenyl sulfone in the molar ratio of 7 : 3: 10 in the presence of sodium carbonate in the diphenyl sulfone solvent.

Figures appended to parentheses in the formula indicate the molar ratio of each repeating unit, and this molar ratio was found by 1H-NMR. Bromination, phosphonic acid esterification, and hydrolysis were conducted to this random copolymer, and a phosphonic acid group contained polymer that has the structure containing about 0.1 pieces of bromo group and about 1. 7 pieces of phosphonic acid group (a group indicated by -P(O) (OH)₂) per one unit containing the biphenyl structure was obtained. In addition, in the formula, figures appended to parentheses show molar ratios of repeating units, respectively.

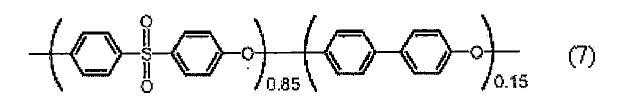

### (Preparation example 2)

With the use of diphenyl sulfone as a solvent, a random copolymer indicated by the following chemical formula (8) was prepared by reacting 4,4'-dihydroxydiphenyl sulfone, 4,4'-dihydroxybiphenyl, and 4,4'-dichlorodiphenyl sulfone in the molar ratio of 4 : 6: 10 in the presence of potassium carbonate. In addition, in the formula, figures appended to parentheses show molar ratios of repeating units, respectively.

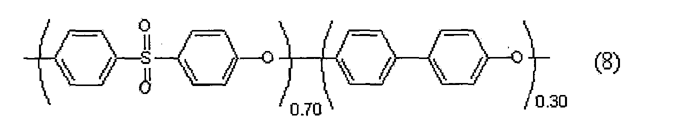

Next, after bromination and phosphonic acid esterification were conducted to this random copolymer according to the method described in JP-A No. 2003-282096, further hydrolysis was carried out and a phosphonic acid group contained polymer that has the structure containing about 0.2 pieces of bromo group and about 1.7 pieces of phosphonic acid group (a group indicated by -P(O) (OH)₂) per one unit containing the biphenyl structure was obtained.

### [Manufacture of polymer electrolyte membrane]

### (Example 1)

A polymer electrolyte solution was prepared by dissolving the polymer electrolyte obtained in Synthesis example 1 in NMP so as to be the concentration of about 30 % by weight. Next, this polymer electrolyte solution was dropped on a glass plate. Then, the polymer electrolyte solution was applied and spread uniformly on the glass plate with the use of a wire coater. In this case, the coating thickness was controlled by the use of a wire coater with 0.3 mm in clearance. After the application, the polymer electrolyte solution was dried at normal pressures at 80°C. Then, after the obtained membrane was dipped in 1 mol/L hydrochloric acid, washed with ion-exchange water and further dried at normal temperature to give a polymer electrolyte membrane of 32 µm in thickness.

### (Example 2)

A polymer electrolyte membrane of 25 µm in thickness was obtained in the same way as that in Example 1, except that a mixture of the polymer electrolyte obtained in Synthesis example 2 and the phosphonic acid group contained polymer obtained in Preparation example 2 (the polymer electrolyte : the phosphonic acid contained polymer = 90 : 10 in weight ratio) was used instead of the polymer electrolyte obtained in

### Synthesis example 1.

### (Example 3)

A polymer electrolyte membrane of 38 µm in thickness was obtained in the same way as that in Example 1, except that a mixture of the polymer electrolyte obtained in Synthesis example 3 and the phosphonic acid group contained polymer obtained in Preparation example 2 (the polymer electrolyte : the phosphonic acid contained polymer = 90 : 10 in weight ratio) was used instead of the polymer electrolyte obtained in Synthesis example 1.

### (Example 4)

A polymer electrolyte membrane of 24 µm in thickness was obtained in the same way as that in Example 1, except that the polymer electrolyte obtained in Synthesis example 4 was used instead of the polymer electrolyte obtained in Synthesis example 1.

### (Example 5)

A polymer electrolyte solution was prepared by dissolving the polymer electrolyte obtained in Synthesis example 11 in DMSO so as to be the concentration of about 10 % by weight. Next, this polymer electrolyte solution was dropped on a glass plate. Then, the polymer electrolyte solution was applied and spread uniformly on the glass plate with the use of a wire coater. In this case, the coating thickness was controlled by the use of a wire coater with 0.5 mm in clearance. After the application, the polymer electrolyte solution was dried at normal pressures at 80°C. Then, after the obtained membrane was dipped in 1 mol/L hydrochloric acid, washed with ion-exchange water and further dried at normal temperature to give a polymer electrolyte membrane of 32 µm in thickness.

### (Example 6)

A polymer electrolyte membrane of 23 µm in thickness was obtained in the same way as that in Example 5, except that the polymer electrolyte obtained in Synthesis example 12 was used instead of the polymer electrolyte obtained in Synthesis example 11.

### (Example 7)

A polymer electrolyte membrane of 44 µm in thickness was obtained in the same way as that in Example 5, except that the polymer electrolyte obtained in Synthesis example 13 was used instead of the polymer electrolyte obtained in Synthesis example 11.

### (Example 8)

A polymer electrolyte solution was prepared by dissolving the polymer electrolyte obtained in Synthesis example 14 in NMP so as to be the concentration of about 20 % by weight. Next, this polymer electrolyte solution was dropped on a glass plate. Then, the polymer electrolyte solution was applied and spread uniformly on the glass plate with the use of a wire coater. In this case, the coating thickness was controlled by the use of a wire coater with 0.3 mm in clearance. After the application, the polymer electrolyte solution was dried at normal pressures. Then, after the obtained membrane was dipped in 1 mol/L hydrochloric acid, washed with ion-exchange water and further dried at normal temperature to give a polymer electrolyte membrane of 45 µm in thickness.

### (Comparative example 1)

A polymer electrolyte membrane of 28 µm in thickness was obtained in the same way as that in Example 1, except that a mixture of the polymer electrolyte obtained in Synthesis example 5 and the phosphonic acid group contained polymer obtained in Preparation example 1 (the polymer electrolyte : the phosphonic acid contained polymer = 95 : 5 in weight ratio) was used instead of the polymer electrolyte obtained in Synthesis example 1.

### (Comparative example 2)

A polymer electrolyte membrane of 29 µm in thickness was obtained in the same way as that in Example 1, except that a mixture of the polymer electrolyte obtained in Synthesis example 6 and the phosphonic acid group contained polymer obtained in Preparation example 2 (the polymer electrolyte : the phosphonic acid contained polymer = 90 : 10 in weight ratio) was used instead of the polymer electrolyte obtained in Synthesis example 1.

### (Comparative example 3)

A polymer electrolyte membrane of 29 µm in thickness was obtained in the same way as that in Example 1, except that the polymer electrolyte obtained in Synthesis example 7 was used instead of the polymer electrolyte obtained in Synthesis example 1.

### (Comparative example 4)

A polymer electrolyte membrane of 29 µm in thickness was obtained in the same way as that in Example 1, except that the polymer electrolyte obtained in Synthesis example 8 was used instead of the polymer electrolyte obtained in Synthesis example 1.

### (Comparative example 5)

A polymer electrolyte membrane of 29 µm in thickness was obtained in the same way as that in Example 1, except that the polymer electrolyte obtained in Synthesis example 9 was used instead of the polymer electrolyte obtained in Synthesis example 1.

### (Comparative example 6)

A polymer electrolyte membrane of 42 µm in thickness was obtained in the same way as that in Example 1, except that the polymer electrolyte obtained in Synthesis example 10 was used instead of the polymer electrolyte obtained in Synthesis example 1.

### [Evaluation of characteristics]

With the use of polymer electrolyte membranes of Examples 1 to 8 and Comparative examples 1 to 6, these membrane resistance and rate of dimensional change caused by water absorption were measured according to the following methods. Moreover, the fuel cell was made by using each polymer electrolyte membrane as follows, and the power generation performance of the obtained fuel cell was evaluated. The obtained result is collectively shown in the table with the ion-exchange capacity and the reduced viscosity of the polymer electrolyte used in each Example or Comparative example.

### (Measurement of membrane resistance)

First, two cells for measurement that a carbon electrode was pasted on the one side of silicon rubber (200 µm in thickness) having an opening of 1 cm² were prepared, and these were arranged so that the carbon electrodes opposed mutually.

Next, each of polymer electrolyte membranes of Example 1 to 4 and Comparative example 1 to 6 was set between this two cells for measurement, and the value of resistance between the two cells for measurement was measured at measurement temperature of 23°C.

After that, the polymer electrolyte membrane was removed and the value of resistance was measured again. And, based on the difference between the two values obtained in the state of having the polymer electrolyte membrane and the state of not having it, the membrane resistance in the membrane thickness direction of the polymer electrolyte membrane was calculated. In addition, 1 mol/L of dilute sulfuric acid was used as the solution to be contacted with the both sides of the polymer electrolyte membrane.

### (Measurement of the rate of dimensional change caused by water absorption)

After each polymer electrolyte membrane was cut out to the square and the obtained membrane was dipped in water kept at 80°C for one hour, length Lw of one side of the membrane was measured just after being taken out. Then, the membrane was dried until the equilibrium water absorption state was reached in the atmosphere of 23°C and 50% in relative humidity, and then length Ld of the same one side as mentioned above was measured. And, with the use of these values, the rate of dimensional change caused by water absorption was calculated based on the formula of 100X(Lw - Ld)/Ld.

### (Manufacture of a membrane-electrode assembly and evaluation of the external appearance)

First, catalyst ink necessary to manufacture a membrane-electrode assembly was made. In 6 mL of commercially available 5 % by weight Nafion solution (the solvent: a mixture of water and lower alcohol), 0.83 g of platinum supporting carbon (SA50BK, manufactured by N. E. Chemcat) where 50 % by weight platinum is supported was poured and further 13.2 mL of ethanol was added. The obtained mixture was processed with ultrasonic wave for one hour and then stirred with a stirrer for five hours, and the catalyst ink was obtained.

Subsequently, a membrane-electrode assembly was made in conformity to the method described in JP-ANo. 2004-089976. That is, the catalyst ink was applied to an area 5.2 cm square in the center part of one side of each polymer electrolyte membrane of the above-mentioned Examples 1 to 7 and Comparative examples 1 to 6 by the spray method. The distance from the discharge opening to the membrane was set to 6 cm and the stage temperature was set to 75°C. After the recoating of eight times was carried out, the membrane was let alone on the stage for 15 minutes to remove the solvent, and the catalyst layer was formed. The catalyst ink was similarly applied also on the other side, and the catalyst layer was formed. A membrane-electrode assembly where about 0.6mg/cm² of platinum was arranged on each one side was obtained from the composition of the catalyst layer and the applied weight. In addition, for the evaluation of wrinkles of the polymer electrolyte membrane, the sample that had been obtained by applying the catalyst ink on the area 3.6 cm square in the one side of the polymer electrolyte membrane corresponding to each Example or Comparative example respectively by the method similar to that mentioned above was separately made. And, the presence of wrinkles on the outer periphery parts of the catalyst layers in these samples was confirmed by visual inspection. The results are collectively shown. In addition, because wrinkles generated in a membrane-electrode assembly might cause a membrane break in a fuel cell, it is undesirable from the standpoint of durability.

A fuel cell was manufactured by using commercially available JARI standard cell. That is, separators made of carbon that cutting processing had been conducted to make grooves for gas passages were arranged to both sides of the membrane-electrode assembly obtained by using the polymer electrolyte membrane of each Example or Comparative example, and further current collectors and end plates were sequentially arranged to the outsides, and then these were tightened with bolts and a fuel cell of 25 cm² in effective membrane area was assembled.

While each obtained fuel cell was kept at 80°C, humidified hydrogen was supplied to the anode and humidified air was supplied to the cathode, respectively. In this case, the back pressure in the gas outlet of the cell was made to become to 0.1 MPaG. Each source gas was humidified by passing the gas through the bubbler, and the water temperature of the bubbler for hydrogen was made to be 45°C and the water temperature of the bubbler for air was made to be 55°C. Here, the gas flow rate of hydrogen was made to be 529 mL/min and the gas flow rate of air was made to be 1665 mL/min. And, the power generation performance of each fuel cell was evaluated by measuring the value of the current density when the voltage became 0.2 V. It is shown that the larger the current density is when the voltage becomes 0.2 V, the more excellent the power generation performance is.

**Table 7**

| Polymer electrolyte membrane | Polymer electrolyte | Membrane resistance (Ω·cm²) | Dimensional change caused by water absorption | Current density at 0.2 V | Presence of wrinkles on the outer periphery part of the catalyst layer |
|---|---|---|---|---|---|
| Example 1 | Synthesis example 1 | 0.069 | 0.048 | 1.64 | None |
| Example 2 | Synthesis example 2 | 0.074 | 0.041 | 1.54 | None |
| Example 3 | Synthesis example 3 | 0.067 | 0.065 | 1.69 | None |
| Example 4 | Synthesis example 4 | 0.067 | 0.043 | 2.00 | None |
| Example 5 | Synthesis example 11 | 0.071 | 0.032 | 1.80 | None |
| Example 6 | Synthesis example 12 | 0.048 | 0.023 | 1.45 | None |
| Example 7 | None Synthesis example 13 | 0.050 | 0.082 | >2.00 | None |
| Example 8 | Synthesis example 14 | 0.078 | 0.076 | 1.85 | None |
| Comparative Example 1 | Synthesis example 5 | 5.0 | 0.034 | Not possible to be measured | None |
| Comparative Example 2 | Synthesis example 6 | 0.063 | 0.119 | 1.87 | Present |
| Comparative Example 3 | Synthesis example 7 | 0.046 | 0.171 | 1.88 | Present |
| Comparative Example 4 | Synthesis example 8 | 0.040 | 0.252 | 1.58 | Present |
| Comparative Example 5 | Synthesis example 9 | 0.14 | 0.014 | 0.29 | None |
| Comparative Example 6 | Synthesis example 10 | 0.13 | 0.022 | 1.35 | None |

From Tables 6 and 7, as for polymer electrolyte membranes in Examples 1 to 8 that had used polymer electrolyte having 1.7 meq/g or more in ion-exchange capacity and 160 mL/g in reduced viscosity, it was confirmed that both of membrane resistance and the dimensional change caused by water absorption were small.

On the other hand, as for polymer electrolyte membrane in Comparative examples 1 to 6 that had used such polymer electrolyte that either or both of these values are outside the above-mentioned ranges, it was confirmed that either of membrane resistance or the rate of dimensional change caused by water absorption or both were extremely large compared to those of polymer electrolyte membranes in Examples 1 to 4.

According to the present invention, it becomes possible to offer polymer electrolyte that can be able to ensure a highly effective fuel cell and can form a polymer electrolyte membrane with a little dimensional change caused by water absorption, and a polymer electrolyte membrane. Moreover, it becomes possible to offer a membrane-electrode assembly and a fuel cell that have such a polymer electrolyte membrane of the present invention, can produce electric power at high efficiency, and have excellent durability.

## Claims

1. A polymer electrolyte that has the ion-exchange capacity of 1.7 meq/g or more and has the reduced viscosity of 160 mL/g or more at 40°C when being made to be 1 % by weight solution with at least one kind of solvent selected from the group consisting of N,N-dimethylformamide, N-methyl-2-pyrrolidone, dimethyl sulfoxide, N,N-dimethylacetamide, sulfolane, and γ-butyrolactone.

2. The polymer electrolyte according to claim 1, wherein the reduced viscosity is 160 mL/g or more at 40°C when being made to be 1 % by mass solution with at least one kind of solvent selected from the group consisting of N,N-dimethylformamide, N-methyl-2-pyrrolidone, and dimethyl sulfoxide.

3. The polymer electrolyte according to claim 1, wherein the polymer electrolyte contains a block copolymer having the first segment having an ion-exchange group and the second segment substantially having no ion-exchange group as an ion conductive component.

4. The polymer electrolyte according to claim 3, wherein the weight average molecular weight measured by gel permeation chromatography of the second segment substantially having no ion-exchange group is 40,000 or more.

5. The polymer electrolyte according to claim 3 or 4, wherein the ion-exchange capacity of the first segment is 3.6 meq/g or more.

6. The polymer electrolyte according to claim 1, wherein the polymer electrolyte is soluble in an organic solvent.

7. The block copolymer according to claim 3 or 4, wherein the block copolymer is obtained by the manufacturing method including the process of obtaining a polymer that the first segment precursor having an ion-exchange group and the second segment precursor substantially having no ion-exchange group have been bonded in a mixed solvent containing two kinds or more of solvents.

8. The block copolymer according to claim 7, wherein the mixed solvent contains a good solvent for the first segment precursor.

9. The block copolymer according to claim 7, wherein the mixed solvent contains a good solvent for the second segment precursor.

10. The block copolymer according to claim 8, wherein the mixed solvent contains a good solvent for the second segment precursor.

11. A polymer electrolyte membrane that contains the polymer electrolyte according to claim 1.

12. The polymer electrolyte membrane according to claim 11, wherein when the prescribed length in the surface direction is referred to as Lw when water adsorption is saturated at 80°C and the prescribed length in the surface direction is referred to as Ld when water adsorption comes to equilibrium at 23°C and at a relative humidity of 50 %, (Lw - Ld)/Ld is 0.08 or less, and the membrane resistance in the membrane thickness direction is 0.1 Ω·cm² or less at 23°C.

13. A method for manufacturing the block copolymer according to claim 3, wherein the method has the process of obtaining a polymer that the first segment precursor having an ion-exchange group and the second segment precursor substantially having no ion-exchange group have been bonded in a mixed solvent containing two kinds or more of solvents.

14. The method for manufacturing a block copolymer according to claim 13, wherein the mixed solvent contains a good solvent for the first segment precursor.

15. The method for manufacturing a block copolymer according to claim 13 or 14, wherein the mixed solvent contains a good solvent for the second segment precursor.

16. A membrane-electrode assembly that has a polymer electrolyte membrane and a catalyst layer formed on the polymer electrolyte membrane, wherein the polymer electrolyte membrane is the polymer electrolyte membrane according to claim 11.

17. A membrane-electrode assembly that has a polymer electrolyte membrane and a catalyst layer formed on the polymer electrolyte membrane, wherein the catalyst layer contains the polymer electrolyte according to claim 11 and a catalyst.

18. A fuel cell that has one pair of separators and a membrane-electrode assembly arranged between the one pair of separators, wherein the membrane-electrode assembly is the membrane-electrode assembly according to claim 16 or 17.
